# EUROPÄISCHE PATENTSCHRIFT

(11) **EP 4 159 045 B1**
(45) Veröffentlichungstag und Bekanntmachung des Hinweises auf die Patenterteilung: **04.09.2024**
(21) Anmeldenummer: 21199959.4
(22) Anmeldetag: 29.09.2021
(51) Int. Cl.: A23G 9/12, A23G 9/22, A23L 2/46, A23L 2/02

(54) **VERFAHREN ZUR HERSTELLUNG EINER FLUIDEN KOMPONENTE EINER LEBENSMITTELGRUNDMASSE UND VORRICHTUNG HIERZU**
METHOD FOR PRODUCING A FLUID COMPONENT OF A FOOD BASE AND DEVICE THEREFOR
PROCÉDÉ DE FABRICATION D'UN COMPOSANT FLUIDE D'UNE PÂTE ALIMENTAIRE ET DISPOSITIF CORRESPONDANT

(43) Veröffentlichungstag der Anmeldung: 05.04.2023
(73) Patentinhaber: Nalflux Cook & Clean UG, 59846 Sundern (DE)
(72) Erfinder: Ampezzan, Valerio, 59846 Sundern (DE)
(74) Vertreter: Kalkoff & Partner Patentanwälte mbB

(56) Entgegenhaltungen:
- CA-C- 2 061 190
- DE-A1- 102010 031 477
- US-A- 6 041 614

## Beschreibung

Die Erfindung betrifft ein Verfahren zur Herstellung einer fluiden Komponente einer Lebensmittelgrundmasse, insbesondere Speiseeisgrundmasse, in einer Zubereitungsvorrichtung mit
- einer Dampferzeugungseinheit zur Bereitstellung von Dampf,
- einer Austrittseinheit zur Abgabe des Dampfes und
- einer in Strömungsrichtung des Dampfes zwischen einem Auslass der Dampferzeugungseinheit und einem Einlass der Austrittseinheit angeordneten Dampfbehandlungseinheit mit einer Heizeinrichtung zur Erhitzung des Dampfes.

Weiter betrifft die Erfindung ein Verfahren zur Herstellung einer Lebensmittelgrundmasse, insbesondere Speiseeisgrundmasse in einer Mixvorrichtung mit einer mechanischen Mischeinheit. Ferner betrifft die Erfindung eine Vorrichtung zur Herstellung einer fluiden Komponente einer Lebensmittelgrundmasse oder einer fluiden Lebensmittelgrundmasse.

Verfahren der eingangs genannten Art werden eingesetzt, um eine fluide Komponente, z.B. ein geschmacksgebendes Konzentrat einer Lebensmittelgrundmasse, beispielsweise Teig, insbesondere eine Speiseeisgrundmasse herzustellen. Die fluide Komponente kann in auf das Verfahren folgenden Verarbeitungsschritten zu einer Lebensmittelgrundmasse, z.B. einer Suppengrundmasse, einer Teiggrundmasse, einer Püreegrundmasse, einer Frucht- ,Obst- oder Gemüsegrundmasse, insbesondere einer Speiseeisgrundmasse und daraufhin zu einem Lebensmittel, beispielsweise Backwaren, Frucht-, Obst- oder Gemüsekompott sowie -püree, Suppen, insbesondere Speiseeis verarbeitet werden.

Zur Herstellung der fluiden Komponente der Lebensmittelgrundmasse, insbesondere Speiseeisgrundmasse, werden Bestandteile der fluiden Komponente in einem Mischbehälter vermengt. Die fluide Komponente wird hierbei üblicherweise durch eine Temperierung des Mischbehälters gekühlt und/oder erhitzt. Das Erhitzen der fluiden Komponente ermöglicht durch einen pasteurisierenden Effekt die Abtötung von Mikroorganismen, z.B. Bakterien. Der Mischbehälter wird beispielsweise mittels eines elektrischen Widerstandsheizers oder mittels elektrischer Induktion erwärmt bis eine erwünschte Temperatur erreicht ist. Üblicherweise wird die fluide Komponente bei einer Kurzzeiterhitzung für 4 Sekunden auf 85 °C und bei einer Langzeiterhitzung für ca. 30 min auf 65 °C erhitzt. Alternativ zur Temperierung des Mischbehälters kann die fluide Komponente mittels in den Mischbehälter eingebrachten Dampf erhitzt werden.

Beispielsweise offenbart die DE 10 2010 031 477 A1 eine Vorrichtung und ein Verfahren zum Ausmischen und Wärmebehandeln eines flüssigen Produkts, insbesondere eines Getränks.

Zubereitungsvorrichtungen der eingangs genannten Art weisen eine Dampferzeugungseinheit zur Bereitstellung von Dampf, eine Austrittseinheit zur Abgabe des Dampfes in die fluide Komponente und eine Dampfbehandlungseinheit mit einer Heizeinrichtung zur Erhitzung des Dampfes auf. Die fluide Komponente wird durch den über die Austrittseinheit eingebrachten, erhitzen Dampf erhitzt.

Bekannte Mixvorrichtungen der eingangs genannten Art weisen zur Herstellung der Lebensmittelgrundmasse darüber hinaus eine mechanische Mischeinheit zum Durchmischen der Komponenten der Lebensmittelgrundmasse auf.

Bekannte Verfahren zur Herstellung einer fluiden Komponente einer Lebensmittelgrundmasse weisen jedoch den Nachteil auf, dass bei der Erhitzung der fluiden Komponente mittels Dampfs das Risiko besteht, dass die Bestandteile der fluiden Komponente und/oder die fluide Komponente zu schnell und gleichzeitig ungleichmäßig erhitzt werden. Bereits geringe Temperaturschwankungen können zu merklichen Geschmacksverlusten der mit der fluiden Komponente hergestellten Lebensmittelgrundmasse und/oder des mit der Lebensmittelgrundmasse hergestellten Lebensmittels führen.

Hiervon ausgehend liegt der Erfindung die Aufgabe zugrunde, ein Verfahren bereitzustellen, dass eine gleichmäßige und schnelle Erhitzung einer fluiden Komponente einer Lebensmittelgrundmasse ermöglicht. Weiter liegt der Erfindung die Aufgabe zugrunde, ein Verfahren bereitzustellen, dass die Herstellung einer homogenen Lebensmittelgrundmasse vereinfacht und beschleunigt.

Ferner liegt der Erfindung die Aufgabe zugrunde, eine Vorrichtung bereitzustellen, die eine einfache und beschleunigte Herstellung einer fluiden Komponente einer Lebensmittelgrundmasse oder einer Lebensmittelgrundmasse ermöglicht.

Die Erfindung löst die Aufgabe durch ein Verfahren zur Herstellung einer fluiden Komponente einer Lebensmittelgrundmasse, insbesondere Speiseeisgrundmasse, mit den Schritten des Anspruchs 1 und eine Verfahren zur Herstellung einer Lebensmittelgrundmasse, insbesondere Speiseeisgrundmasse, mit den Schritten des Anspruchs 13 sowie durch eine Vorrichtung zur Herstellung einer fluiden Komponente einer Lebensmittelgrundmasse oder einer fluiden Lebensmittelgrundmasse nach Anspruch 15. Vorteilhafte Weiterbildungen der Erfindung sind in den abhängigen Ansprüchen angegeben.

Kennzeichnend für das erfindungsgemäße Verfahren zur Herstellung einer fluiden Komponente einer Lebensmittelgrundmasse in der Zubereitungsvorrichtung sind die folgenden Schritte:
- Vermengen von Bestandteilen der fluiden Komponente in einem Mischbehälter,
- Überwachen der Temperatur der fluiden Komponente,
- Erwärmen des mittels der Dampferzeugungseinheit bereitgestellten Dampfs in der Dampfbehandlungseinheit,
- Einbringen des erhitzten Dampfes über die Austrittseinheit in die fluide Komponente,
- Regeln der Einbringung des Dampfes in Abhängigkeit von der Temperatur der fluiden Komponente.

Das Verfahren wird in der Zubereitungsvorrichtung mit der Dampferzeugungseinheit, der Austrittseinheit und der Dampfbehandlungseinheit durchgeführt. Die Dampferzeugungseinheit ist derart ausgebildet, dass ein Heizfluid, z.B. Wasser, durch Erhitzen verdampft wird und Dampf, beispielsweise Wasserdampf erzeugt wird. Die Dampfbehandlungseinheit ist zwischen der Dampferzeugungseinheit und der Austrittseinheit angeordnet und weist die Heizeinrichtung auf, die derart ausgebildet ist, dass der aus der Dampferzeugungseinheit zugeführte Dampf erhitzt und dadurch die relative Feuchtigkeit des Dampfs reduziert wird. Die Austrittseinheit ist dazu ausgebildet, den erhitzten Dampf in den Mischbehälter, bzw. in die fluide Komponente abzugeben.

Zur Herstellung der fluiden Komponente der Lebensmittelgrundmasse dient der an der Zubereitungsvorrichtung anordbare Mischbehälter. Der Mischbehälter, innerhalb dem die fluide Komponente bspw. durch eine vorgebbare Vermengung ihrer Bestandteile zubereitet wird, ist bevorzugt zylinderartig ausgebildet und weist einen beispielsweise kreisförmigen, polygonförmigen oder ellipsenförmigen Querschnitt auf. Der Mischbehälter weist einen durch eine Grundfläche und eine Mantelfläche gebildeten Innenraum auf. Der Innenraum bildet einen freien Bereich des Mischbehälters, der über eine der Grundfläche gegenüberliegende Öffnung befüllt werden kann. Die Öffnung kann durch ein Deckelelement verschließbar sein. Der Innenraum des Mischbehälters weist beispielsweise ein Volumen von mindestens 5 L, bevorzugt mindestes 10 L, besonders bevorzugt mindestens 15 L auf. Beispielsweise ist der Mischbehälter ein Edelstahl-Eimer mit einem Volumen von 15 L.

Unter einem Vermengen von Bestandteilen wird im Rahmen der Erfindung das Zusammenführen von mindestens zwei Bestandteilen der fluiden Komponente verstanden. Die Bestandteile, beispielsweise Wasser, Molkereiprodukte z.B. Milch oder Joghurt, Fette, Süßungsmittel oder Eier, aber auch Teigwaren, z.B. Nudeln, können einzeln oder in Kombination dem Mischbehälter zugegeben werden. Weiter können die Bestandteile der fluiden Komponente beispielsweise manuell durch eine das Verfahren betreuende Fachkraft, z.B. einen Koch oder eine Köchin, oder maschinell, z.B. mittels einer Fördereinrichtung dem Mischbehälter zugegeben werden.

Zur erfindungsgemäßen Überwachung der Temperatur der fluiden Komponente können verschiedene Mittel verwendet werden. Die Temperatur der fluiden Komponente kann beispielsweise mittels eines Thermoelements oder eines Temperaturfühlers, z.B. eines PT100- Temperaturfühlers überwacht werden. Der Temperaturfühler wird hierzu bevorzugt innerhalb der fluiden Komponente angeordnet.

In der Dampferzeugungseinheit wird der Dampf durch Erhitzen des Heizfluids bereitgestellt und ausgehend von der Dampferzeugungseinheit in Strömungsrichtung über den Auslass der Dampferzeugungseinheit durch die Dampfbehandlungseinheit und über den Einlass der Austrittseinheit in die Austrittseinheit geleitetet. In der Dampfbehandlungseinheit wird der Dampf, beispielsweise mittels in der Heizeinrichtung angeordneter Heizkörper, z.B. elektrischer Heizbänder erhitzt.

Der erhitzte Dampf wird über die Austrittseinheit in die bevorzugt im Mischbehälter angeordnete fluide Komponente eingebracht, wodurch diese aufgeheizt wird. Die Einbringung des Dampfes in die fluide Komponente wird dabei unter Berücksichtigung der Temperatur der fluiden Komponente geregelt. Beispielsweise wird bei der Überwachung der Temperatur die Ist-Temperatur ermittelt und in Abhängigkeit von der Ist-Temperatur die Menge des Dampfs oder die Temperatur des Dampfs variiert.

Das zusätzliche Erwärmen des Dampfes in der Dampfbehandlungseinheit wirkt einem unerwünschten Verdünnen der fluiden Komponente aufgrund einer hohen relativen Feuchtigkeit des Dampfes und einem damit einhergehenden Geschmacksverlust der fluiden Komponente entgegen. Durch das Erhitzten mittels Dampfs kann die fluide Komponente schneller und gleichzeitig hygienischer hergestellt werden. Die Überwachung der Temperatur der fluiden Komponenten und das Regeln der Einbringung des Dampfes in Abhängigkeit von dieser Temperatur ermöglichen ein gleichmäßigeres Erhitzen der fluiden Komponenten und wirken unerwünschten Temperaturschwankungen entgegen.

Der Dampf kann in beliebiger Weise, z.B. in radialer Richtung zu einer Hauptachse der Austrittseinheit in die fluide Komponente eingebracht werden. Nach einer vorteilhaften Weiterbildung der Erfindung ist jedoch vorgesehen, dass der Dampf durch eine an der Austrittseinheit angeordnete Austrittsöffnung derart in Umfangsrichtung zu einer Hauptachse der Austrittseinheit in die fluide Komponente eingebracht wird, dass durch die Strömungsrichtungen des Dampfes die fluide Komponente in dem Mischbehälter in Rotation versetzt wird.

Vorzugsweise rotiert die fluide Komponente in eine Richtung um die Hauptachse. Die Hauptachse der Austrittseinheit ist bezogen auf die Gebrauchslage der Zubereitungsvorrichtung bevorzugt vertikal angeordnet. Die Austrittsöffnung ist ein freier Bereich der Austrittseinheit über den der erhitzte Dampf aus der Austrittseinheit abgegeben wird. Die Austrittsöffnung ist derart an der Austrittseinheit angeordnet, dass der erhitzte Dampf in Umfangsrichtung zur Hauptachse in die fluide Komponente eingebracht wird. Das Einbringen des erhitzten Dampfes in Umfangsrichtung zur Hauptachse versetzt die fluide Komponente in dem Mischbehälter in Rotation. Die fluide Komponente kann durch die gerichtete Einbringung des erhitzten Dampfes auf vorteilhafte Weise durchmischt werden, ohne dass es einer zusätzlichen Mischeinheit bedarf. Hierdurch kann der Dampf gleichmäßiger in die fluide Komponente eingebracht und die fluide Komponente schonender erhitzt werden, wodurch eine besonders gute Geschmacksentfaltung für die fluide Komponente erzielt wird. Darüber hinaus ermöglicht die besonders gute Geschmacksentfaltung ein Ersparnis an Bestandteilen der fluiden Komponente, wodurch insbesondere kostenintensive Bestandteile eingespart und somit die Herstellungskosten der fluiden Komponente gesenkt werden.

Die Einbringung des Dampfes in Umfangsrichtung der Hauptachse der Austrittseinheit reicht bereits dazu aus, um die fluide Komponente gleichmäßig zu vermischen. Nach einer vorteilhaften Ausgestaltung der Erfindung ist jedoch vorgesehen, dass der Dampf in einem Winkel von bis zu 90 °, bevorzugt bis zu 45 °, besonders bevorzugt bis zu 25° zu einer durch die Oberfläche der fluiden Komponente gebildeten, bevorzugt senkrecht zur Hauptachse der Austrittseinheit angeordneten Hauptebene in die fluide Komponente eingebracht wird.

Das Verfahren wird bevorzugt in einem Zustand durchgeführt, indem die fluide Komponente in einem ruhenden Zustand, d.h. vor und/oder nach der Einbringung des Dampfes derart innerhalb des Mischbehälters angeordnet ist, dass die Oberfläche der fluiden Komponente parallel zur Grundfläche des Mischbehälter angeordnet ist. Der Mischbehälter ist bevorzugt koaxial zu der Hauptachse der Austrittseinheit angeordnet. Beispielsweise ist der Mischbehälter auf einer Auflagefläche der Zubereitungsvorrichtung und koaxial zu der Hauptachse der Austrittseinheit angeordnet, sodass die Austrittseinheit mittig in dem Mischbehälter angeordnet ist.

Der Dampf kann in einem vorstehend beschriebenen Winkel, der entlang der Hauptachse in eine und/oder beide Richtungen zur Hauptebene ausgerichtet ist, in die fluide Komponente eingebracht werden. Bevorzugt wird der Dampf in einem auf die Grundfläche des Mischbehälters gerichteten Winkel von beispielsweise 22,5 ° zu der Hauptebene in die fluide Komponente eingebracht. Die Austrittseinheit ist derart ausgebildet, dass der Dampf in einem Winkel von bis zu 90 °, bevorzugt bis zu 45 °, besonders bevorzugt bis zu 25° zur Hauptebene in die fluide Komponente eingebracht wird. Durch die abgewinkelte Einbringung des Dampfes wird die fluide Komponente zuverlässig in Rotation versetzt und besonders homogen durchmischt, sodass selbst in Randbereichen der Grundfläche des Mischbehälters angeordnete Bestandteile der fluiden Komponente erfasst werden. Die bessere Durchmischung ermöglicht die Herstellung einer besonders homogenen fluiden Komponente.

Die Einbringung des Dampfes kann beispielsweise in Abhängigkeit von der Durchmischung der fluiden Komponente gestoppt werden. Nach einer vorteilhaften Weiterbildung der Erfindung ist jedoch vorgesehen, dass die Einbringung des Dampfes gestoppt wird, sobald die Temperatur der fluiden Komponente einen einstellbaren Wert erreicht. Der Wert wird bevorzugt vor Beginn der Einbringung des Dampfes eingestellt. Es kann beispielsweise ein Wertebereich oder ein exakter Wert eingestellt werden. Die Einbringung des Dampfes kann bei Erreichen des exakten Werts gestoppt werden.

Der Wertebereich für die einstellbare Temperatur weist bevorzugt eine untere und eine obere Grenze auf. Bei Erreichen der unteren Grenze wird die Einbringung des Dampfs beispielsweise stetig reduziert, bis die obere Grenze erreicht ist und die Einbringung des Dampfs gänzlich stoppt wird. Ferner kann die Einbringung des Dampfes nach einer einstellbaren Erwärmzeit gestoppt werden. Bevorzugt wird die Einbringung des Dampfes gestoppt, falls der einstellbare Wert, z.B. der exakte Wert oder die obere Grenze des Wertebereichs, innerhalb der einstellbaren Erwärmzeit nicht erreicht worden ist. Dadurch dass die Einbringung des Dampfes gestoppt wird, sobald die Temperatur der fluiden Komponente den einstellbaren Wert erreicht, kann unerwünschten Temperaturspitzen auf vorteilhafte Weise vorgebeugt werden.

Nach einer vorteilhaften Weiterbildung der Erfindung ist vorgesehen, dass der Dampf mit Erreichen des einstellbaren Werts der Temperatur der fluiden Komponente kontinuierlich und/oder in Zeitintervallen bis zum Ablauf einer einstellbaren Prozesszeit in die fluide Komponente eingebracht wird. Die Prozesszeit kann zu einem belieben Zeitpunkt vor Erreichen des einstellbaren Werts eingestellt werden, wird jedoch bevorzugt vor Beginn der Einbringung des Dampfes eingestellt.

Während der Prozesszeit wird die fluide Komponente bevorzugt auf der Temperatur im Bereich des einstellbaren Werts, besonders bevorzugt auf einer Temperatur innerhalb des Wertebereichs gehalten. Der Dampf wird bis zum Ablauf der einstellbaren Prozesszeit bevorzugt in Zeitintervallen über die Austrittsöffnung in die fluide Komponente abgegeben. Die Zeitintervalle werden derart eingestellt, dass die fluide Komponente während des Ablaufs der Prozesszeit nicht in die Austrittseinheit eindringt. Beispielsweise beschreiben ein erstes Zeitintervall die Dauer der Dampfabgabe und ein zweites Zeitintervall die Dauer einer Pause zwischen zwei ersten Zeitintervallen, in der kein Dampf abgegeben wird. Bevorzugt sind das erste Zeitintervall und das zweite Zeitintervall unabhängig voneinander einstellbar. Das zweite Zeitintervall wird z.B. auf eine Zeit von bis zu 15 Sekunden, bevorzugt bis zu 10 Sekunden, besonders bevorzugt bis zu 5 Sekunden eingestellt. Das erste Zeitintervall ist im Vergleich zum zweiten Zeitintervall z.B. auf eine geringere Zeit von bis zu 14 Sekunden, bevorzugt bis zu 9 Sekunden, besonders bevorzugt bis zu 4 Sekunden eingestellt. Beispielsweise verhindert ein erstes Zeitintervall von 3 Sekunden mit einem zweiten Zeitintervall von 5 Sekunden das Eindringen der fluiden Komponente in die Austrittseinheit. Durch das Einbringen des Dampfes nach Erreichen des einstellbaren Werts der Temperatur der fluiden Komponente kann eine große Bereite an Bestandteilen zu verschiedensten fluiden Komponenten verarbeitet werden. Die intervallartige Einbringung des Dampfes während des Ablaufs der Prozesszeit wirkt in vorteilhafter Weise einem unerwünschten Eindringen der fluiden Komponente in die Austrittseinheit entgegen.

Nach einer vorteilhaften Weiterbildung der Erfindung ist vorgesehen, dass der fluiden Komponente vor und/oder nach der Einbringung des Dampfes eine Zutat, bevorzugt eine geschmacksgebende Zutat hinzugefügt wird. Unter einer Zutat wird im Rahmen der Weiterbildung der Erfindung ein weiterer Bestandteil der fluiden Komponente verstand. Als Zutat wird beispielsweise Wasser, Kakao, ein Molkereiprodukt z.B. Milch, Joghurt oder Butter, eine Nuss, ein Süßungsmittel, z.B. Saccharose, Dextrose, Glucose, oder Honig sowie Ahornsirup, eine Frucht, ein Gemüse, ein Obst, oder ein Ei, aber auch Teigwaren, z.B. Nudelteig oder Nudeln der fluiden Komponente zugegeben. Es können eine Zutat oder mehrere Zutaten einzeln oder in Kombination der fluiden Komponente zugegeben werden. Als geschmacksgebende Zutat kann z.B. ein Gewürz oder eine Gewürzmischung, ein Aromastoff, eine Essenz, insbesondere eine Speiseeispaste der fluiden Komponente zugegeben werden. Es können eine oder mehrere geschmacksgebende Zutaten der fluiden Komponenten zugegeben werden. Die Zugabe weiterer Zutaten, insbesondere geschmacksgebender Zutaten erhöht die Geschmacksintensität der fluiden Komponente, sodass diese beispielsweise als besonders geschmacksintensives Konzentrat weiterverarbeitet werden kann.

Der einstellbare Wert der Temperatur kann in beliebiger Weise, bspw. in Abhängigkeit von einer gewünschten Garstufe der fluiden Komponente eingestellt werden. Nach einer vorteilhaften Ausgestaltung der Erfindung ist jedoch vorgesehen, dass die Temperatur der fluiden Komponente in Abhängigkeit von der hinzugefügten Zutat eingestellt wird. Der Wert der Temperatur der fluiden Komponente wird derart begrenzt, dass die fluide Komponente und/oder die hinzugefügte Zutat nicht aufgespalten wird. Bevorzugt wird auch die Erwärmzeit und besonders bevorzugt die Prozesszeit in Abhängigkeit von der hinzugefügten Zutat oder den hinzugefügten Zutaten eingestellt.

Bevorzugt wird die fluide Komponente bis auf eine Temperatur zwischen 30-150 °C, bevorzugt 35-125 °C, besonders bevorzugt 40-100°C erhitzt. Unterschiedliche fluide Komponenten und diesen jeweils hinzugefügte Bestandteile, insbesondere Zutaten werden mit verschiedenen Verarbeitungsbedingungen, z.B. verschiedenen eingestellten Werten der Temperatur der fluiden Komponente, verschiedenen Erwärmzeit oder verschiedenen Prozesszeiten hergestellt. Beispielsweise wird als fluide Komponente Joghurt, eine Schokoladensauce oder insbesondere ein geschmackgebendes Konzentrat einer Speiseeisgrundmasse hergestellt. Um Joghurt herzustellen wird z.B. Milch mit Milchsäurebakterien, Zucker, und weiteren Bestandteilen, z.B. Frucht- oder Obstbestandteilen in dem Mischbehälter vermengt. Damit der Joghurt nicht zu Käse verarbeitet wird, wird die fluide Komponente mit der Milch, den Milchsäurebakterien, dem Zucker und ggf. weiteren Bestandteilen mittels des erhitzen Dampfs erhitzt bis die Temperatur der fluiden Komponente einen eingestellten Wert von ca. 50 °C erreicht.

Der Dampf kann zur Erhitzung der fluiden Komponente mit einer beliebigen Dampftemperatur in die fluide Komponente eingebracht werden. Nach einer vorteilhaften Weiterbildung der Erfindung ist jedoch vorgesehen, dass der Dampf mit einer Dampftemperatur von bis zu 250 °C, bevorzugt bis zu 240 °C, besonders bevorzugt bis zu 230 °C durch die Austrittsöffnung in die fluide Komponente eingebracht wird. Die Heizeinrichtung der Dampfbehandlungseinheit weist Heizkörper auf, die derart ausgebildet sind, dass der Dampf im Bereich der Austrittsöffnung eine Dampftemperatur zwischen 150-250 °C, bevorzugt 200-250 °C, besonders bevorzugt 210-230 °C aufweist. Die Begrenzung der Dampftemperatur im Bereich der Austrittseinheit ermöglicht mit der vorteilhaften Durchmischung der fluiden Komponente eine gleichmäßige und dennoch schnelle Erhitzung der fluiden Komponente. Sich negativ auf die Geschmacksentwicklung der fluiden Komponente auswirkende Temperaturschwankungen und Temperaturspitzen können hierdurch besonders zuverlässig vermieden werden.

Die Auflagefläche der Zubereitungsvorrichtung kann beispielsweise entlang einer parallel zur Hauptachse der Austrittseinheit angeordneten Bewegungsbahn verstellt werden, um den Mischbehälter relativ zur Hauptebene zu bewegen. Nach einer äußerst vorteilhaften Ausgestaltung der Erfindung ist jedoch vorgesehen, dass die Austrittseinheit vor dem Einbringen des Dampfes in die fluide Komponente relativ zur Hauptebene entlang der Hauptachse der Austrittseinheit zwischen einer Grundstellung, in der die Austrittsöffnung oberhalb der Hauptebene angeordnet ist, und einer Betriebsstellung, in der die Austrittsöffnung unterhalb der Hauptebene angeordnet ist, verstellt wird.

Die Austrittseinheit kann maschinell, z.B. elektrisch mittels eines Linear- oder Schrittmotors, oder manuell zwischen der Grund- und der Betriebsstellung bewegt werden. In der Grundstellung ist die Austrittsöffnung bezogen auf die Hauptachse der Austrittseinheit oberhalb der Oberfläche der fluiden Komponente angeordnet. In der Betriebsstellung ist die Austrittsöffnung bezogen auf die Hauptachse der Austrittseinheit unterhalb der Oberfläche der fluiden Komponente angeordnet. Ausgehend von der Grundstellung wird die Austrittseinheit entlang ihrer Hauptachse in Richtung der Hauptebene verstellt und ein Abschnitt der Austrittseinheit in die fluide Komponente eingetaucht, sodass die Austrittsöffnung unterhalb der Oberfläche der fluiden Komponente angeordnet ist. Bevorzugt beginnt danach die Einbringung des erhitzten Dampfs in die fluide Komponente. Besonders bevorzugt wird vor Beginn der Einbringung des erhitzten Dampfs mit einer Sicherheitsvorrichtung, z.B. einer Lichtschranke sichergestellt, dass die Austrittseinheit innerhalb des Mischbehälters angeordnet ist. Durch die Verstellung der Austrittseinheit vor der Einbringung des erhitzten Dampfs, können die Bestandteile der fluiden Komponente auf äußerst vorteilhafte Weise einfach und sicher vermengt werden. Die Sicherheitsvorrichtung wirkt einem Risiko von unerwünschten Verbrühungen des Bedienpersonals durch erhitzten Dampf entgegen.

Nach einer besonders vorteilhaften Weiterbildung der Erfindung ist vorgesehen, dass der Dampf über mehrere jeweils an einem Austrittselement der Austrittseinheit angeordnete Austrittsöffnungen in die fluide Komponente eingebracht wird. Das Austrittselement ist vorzugsweise zylinderartig ausgebildet und weist einen kreisförmigen, polygonförmigen oder ellipsenförmigen Querschnitt auf. Bevorzugt ist das Austrittselement derart an der Austrittseinheit angeordnet, dass eine Längsachse des Austrittselements die Hauptachse der Austrittseinheit schneidend und besonders bevorzugt in radialer Richtung zur Hauptachse der Austrittseinheit angeordnet ist.

Die Austrittsöffnung ist bevorzugt senkrecht zur Längsachse des Austrittselements angeordnet. Das Austrittselement weist bevorzugt mehrere, besonders bevorzugt zwei Austrittsöffnungen auf. Bevorzugt wird der erhitzte Dampf über drei Austrittselemente mit jeweils zwei Austrittsöffnungen in die fluide Komponente eingebracht. Dadurch dass der erhitzte Dampf über mehrere Austrittsöffnungen in die fluide Komponente eingebracht wird, kann der Dampf besonders gleichmäßig in die fluide Komponente eingebracht werden. Ferner kann hierdurch die fluide Komponente besonders zuverlässig in Rotation versetzt und somit noch besonders homogen durchmischt werden.

Kennzeichnend für das Verfahren zur Herstellung einer Lebensmittelgrundmasse, insbesondere Speiseeisgrundmasse in einer Mixvorrichtung sind die folgenden Schritte:
- Herstellung einer ersten fluiden Komponente der Lebensmittelgrundmasse nach dem vorstehend beschriebenen Verfahren,
- Hinzufügen mindestens einer zweiten Komponente zu der ersten fluiden Komponente der Lebensmittelgrundmasse, wobei die erste fluide Komponente eine erste hohe Temperatur und die zweite Komponente eine im Vergleich zur ersten Temperatur niedrigere zweite Temperatur aufweist,
- Mischen der beiden Komponenten mittels der mechanischen Mischeinheit.

Die Mixvorrichtung unterscheidet sich von der Zubereitungsvorrichtung durch eine mechanische Mischeinheit. Die mechanische Mischeinheit ist beispielsweise als Stabmixer ausgebildet. Der Stabmixer kann z.B. als Handgerät zur mobilen Verwendung einer Fachkraft und/oder verstellbar an der Zubereitungsvorrichtung angeordnet sein.

Für die Herstellung einer Lebensmittelgrundmasse, insbesondere einer Speiseeisgrundmasse wird die erste fluide Komponente der Lebensmittelgrundmasse in einem Mischbehälter nach dem vorstehend beschrieben Verfahren hergestellt. Der ersten fluiden Komponente wird zur Herstellung der Lebensmittelgrundmasse mindestens eine zweite Komponente hinzugefügt. Bevorzugt wird die zweite Komponente mit einem Volumenverhältnis von bis zu 15:1, bevorzugt bis zu 10:1, besonders bevorzugt bis zu 5:1 von zweiter Komponente zu erster fluider Komponente der ersten fluiden Komponente beigegeben. Es können auch weitere Komponenten der ersten fluiden und zweiten Komponente beigeben werden. Die zweite Komponente wird der ersten fluiden Komponente bevorzugt unmittelbar nach der Herstellung der ersten fluiden Komponente hinzugefügt, sodass die zweite Temperatur der zweiten Komponente beim Hinzufügen zur ersten fluiden Komponente niedriger ist als die erste hohe Temperatur der ersten fluiden Komponente. Beispielsweise weist die erste fluide Komponente eine erste Temperatur von 90° und die zweite Komponente eine zweite Temperatur von 10 °C auf.

Besonders bevorzugt wird der ersten Komponente als zweite Komponente ein Fluid, bevorzugt Wasser, besonders bevorzugt Milch hinzugefügt. Für die Herstellung einer Speiseeisgrundmasse wird als erste fluide Komponente beispielsweise ein geschmacksgebendes Konzentrat, z.B. ein Vanille-Konzentrat hergestellt und als zweite Komponente pasteurisierte Milch beigegeben. Hierbei hat das geschmacksgebende Konzentrat z.B. ein Volumen von 2 L und es werden bei einem Volumenverhältnis von 4:18 L Milch hinzugefügt.

Die Komponenten der Lebensmittelgrundmasse werden mittels der mechanischen Mischeinheit bevorzugt gleichmäßig gemischt. Hierzu wird die Mischeinheit innerhalb des Mischbehälters, insbesondere innerhalb der Komponenten angeordnet und z.B. in Abhängigkeit von einem erwünschten Mischgrad und/oder für eine einstellbare Mischzeit aktiviert. Eine Speiseeisgrundmasse kann nach dem Mischen beispielsweise in einer Eismaschine zu Speiseeis verarbeitet werden.

Dadurch dass die erste fluide Komponente eine hohe Temperatur aufweist, wird die Viskosität der ersten fluiden Komponente verringert und die Löslichkeit der zweiten Komponente erhöht. Hierdurch kann eine homogenere Lebensmittelgrundmasse hergestellt werden. Die Herstellung der ersten fluiden Komponente mit dem vorstehend beschriebenen Verfahren beschleunigt darüber hinaus die Herstellung der Lebensmittelgrundmasse, nachdem nicht die gesamte Lebensmittelgrundmasse erhitzt werden muss. Bereits pasteurisierte Milch als zweite Komponente muss nicht erneut erhitzt werden, um rechtliche Hygienevorschriften bei der Lebensmittelherstellung einzuhalten.

Die Vorrichtung zur Herstellung einer fluiden Komponente einer Lebensmittelgrundmasse oder einer Lebensmittelgrundmasse, insbesondere nach einem der vorstehend beschriebenen Verfahren ist wie die vorstehend beschriebene Zubereitungsvorrichtung ausgebildet und weist entsprechend eine Dampferzeugungseinheit zur Bereitstellung von Dampf und eine Austrittseinheit auf. Die Austrittseinheit weist eine Austrittsöffnung zur Abgabe des Dampfes auf. Die Vorrichtung weist ferner die in Strömungsrichtung des Dampfes zwischen einem Auslass der Dampferzeugungseinheit und einem Einlass der Austrittseinheit angeordnete Dampfbehandlungseinheit mit einer Heizeinrichtung zur Erhitzung des Dampfes auf. Die Dampferzeugungseinheit ist bevorzugt als Dampfkessel, z.B. als Elektrodampfkessel ausgebildet.

Kennzeichnend für die Vorrichtung ist, dass die Austrittsöffnung derart angeordnet ist, dass der erhitzte Dampf in Umfangsrichtung zu der Hauptachse der Austrittseinheit austritt. Die Austrittsöffnung ist derart an der Austrittseinheit angeordnet, dass dieAbgabe des Dampfes in Umfangsrichtung zu der Hauptachse der Austrittseinheit die bevorzugt in einem Mischbehälter angeordnete fluide Komponente oder Lebensmittelgrundmasse in Rotation versetzt. Die Austrittsöffnung ist bevorzugt in Umfangsrichtung zu der Hauptachse der Austrittseinheit angeordnet.

Die fluide Komponente kann durch die gerichtete Abgabe des erhitzten Dampfes auf vorteilhafte Weise durchmischt werden, ohne dass es einer zusätzliche Mischeinheit bedarf und der Dampf ist gleichmäßig in die fluide Komponente oder die Lebensmittelgrundmasse einbringbar, sodass diese schonend erhitzt werden. Durch die Erhitzung mittels Dampfs kann auf lange Aufheizzeiten verzichtet werden. Der Dampf ist energiesparend und wassersparend bereitstellbar und kann die fluide Komponente oder Lebensmittelgrundmasse schnell erhitzen. Darüber hinaus ermöglicht die Erhitzung des Dampfs in der Heizeinrichtung der Dampfbehandlungseinheit die Reduzierung der relativen Feuchtigkeit des Dampfes.

Nach einer vorteilhaften Weiterbildung der Vorrichtung ist vorgesehen, dass die Austrittsöffnung in einem Winkel von bis zu 90 °, bevorzugt bis zu 45 °, besonders bevorzugt bis zu 25° zu einer durch die Oberfläche der fluiden Komponente oder Lebensmittelgrundmasse gebildeten, bevorzugt senkrecht zur Hauptachse der Austrittseinheit angeordneten Hauptebene angeordnet ist. Die Hauptebene ist wie vorstehend für die Zubereitungsvorrichtung beschrieben gebildet. Bevorzugt ist die Austrittsöffnung in einem auf die Grundfläche des Mischbehälters gerichteten Winkel von 22,5 ° zur Hauptebene angeordnet. Durch die abgewinkelte Anordnung der Austrittsöffnung wird auf vorteilhafte Weise ermöglicht, dass der aus der Austrittsöffnung abgegebene Dampf selbst Randbereiche der Grundfläche des Mischbehälters erreicht und dort angeordnete oder abgelagerte Bestandteile der fluiden Komponenten erfassen kann. Hierdurch kann eine besonders gute Durchmischung der fluiden Komponente oder der Lebensmittelgrundmasse erzielt werden.

Nach einer vorteilhaften Ausgestaltung der Vorrichtung ist vorgesehen, dass die Austrittseinheit ein mindestens zwei Austrittselemente mit jeweils einer Austrittsöffnung aufweisendes Dampfverteilelement zur Verteilung des Dampfes auf die Austrittselemente aufweist. Das Dampfverteilelement ist derart ausgebildet, dass der Dampf auf die mindestens zwei Austrittselemente verteilt wird. Bevorzugt ist der Dampf gleichmäßig auf die Austrittselemente verteilbar. Die Austrittselemente sind wie vorstehend für die Zubereitungsvorrichtung beschrieben ausgebildet. Die beiden Austrittselemente sind derart an dem Dampfverteilelement angeordnet, dass sich die Längsachsen der Austrittselemente auf der Hauptachse der Austrittseinheit in einem Schnittpunkt schneiden.

Bevorzugt sind an dem Dampfverteilelement drei Austrittselemente angeordnet. Besonders bevorzugt sind an einem Austrittselement zwei in Längsachsenrichtung des Austrittselements beabstandet zueinander angeordnete Austrittsöffnungen angeordnet. Die Austrittselement können einstückig mit dem Dampfverteilelement ausgebildet sein. Die Austrittselemente weisen jedoch jeweils bevorzugt einen ersten Verbindungsabschnitt auf, der mit einem am Dampfverteilelement angeordneten zweiten Verbindungsabschnitt in Eingriff bringbar ist. Beispielsweise ist das Dampfverteilelement als Frästeil ausgebildet und weist mehre als Innen- oder Außengewinde ausgebildeten zweiten Verbindungsabschnitte auf, die mit an den Austrittselementen als Außen- oder Innengwinde ausgebildeten ersten Verbindungsabschnitten in Eingriff bringbar sind. Hierdurch können die Austrittselemente im Reinigungsfall schnell von dem Dampfverteilelement demontiert werden.

Durch die Abgabe des erhitzten Dampfs über mehrere Austrittsöffnungen wird auf vorteilhafte Weise erreicht, dass der Dampf besonders gleichmäßig in die fluide Komponente oder Lebensmittelgrundmasse eingebracht werden kann. Ferner kann hierdurch die bevorzugt in dem Mischbehälter angeordnete fluide Komponente oder Lebensmittelgrundmasse einfach und schnell in Rotation versetzt werden, sodass der Dampf eine höhere Dampftemperatur aufweisen kann und somit die Herstellung der fluiden Komponente oder Lebensmittelgrundmasse weiter beschleunigt werden.

Nach einer vorteilhaften Weiterbildung der Vorrichtung ist vorgesehen, dass die Austrittseinheit ein sich entlang der Hauptachse der Austrittseinheit zwischen der Dampfbehandlungseinheit und dem Dampfverteilelement erstreckendes Zuführelement zur Leitung des Dampfes von der Dampfbehandlungseinheit zum Dampfverteilelement aufweist. Das Zuführelement ist rohrartig ausgebildet und weist eine Wandung mit einem bevorzugt kreisförmigen, polygonförmigen oder ellipsenförmigen Querschnitt auf. Das Zuführelement ist derart ausgebildet, dass der erhitzte Dampf von der Dampfbehandlungseinheit in das Dampfverteilelement weitergeleitet wird. Das Zuführelement weist mindestens einen geraden Abschnitt auf, kann aber auch eine Krümmung aufweisen. Das Zuführelement ist beispielsweise ein Rohr. Durch das Zuführelement kann die Austrittseinheit auch in einem Mischbehälter mit einem größeren Volumen angeordnet werden. Dadurch kann in einem Prozess eine besonders große Menge der fluiden Komponente oder der Lebensmittelgrundmasse hergestellt werden, wodurch die Herstellungskosten reduziert werden können.

Das Dampfverteilelement kann beispielsweise einstückig mit dem Zuführelement ausgebildet sein. Nach einer vorteilhaften Weiterbildung der Vorrichtung ist jedoch vorgesehen, dass die Austrittseinheit einen an dem Dampfverteilelement und/oder dem Zuführelement angeordneten Kopplungsabschnitt zur Anordnung des Dampfverteilelements an dem Zuführelement aufweist. Bevorzugt weisen das Zuführelement und das Dampfverteilelement jeweils einen ersten Kopplungsabschnitt auf, der jeweils mit einem von zwei an einem Kopplungselement angeordneten zweiten Kopplungsabschnitt in Eingriff bringbar ist. Die Kopplungsabschnitte sind vorzugsweise als Innen- oder Außengewinde ausgebildet, wobei der erste Kopplungsabschnitt bevorzugt als Innengewinde und der zweiten Kopplungsabschnitt bevorzugt als Außengewinde ausgebildet ist. Beispielsweise ist das Kopplungselement als Doppelnippel ausgebildet. Dadurch dass das Dampfverteilelement über den Kopplungsabschnitt an dem Zuführelement angeordnet ist, ist die Austrittseinheit im ggf. anfallenden Stör- und/oder Wartungsfall, z.B. durch Verunreinigungen innerhalb der Austrittseinheit schnell demontierbar, wodurch Wartungszeiten reduziert werden können. Durch das Kopplungselement kann wiederum die Dichtigkeit zwischen dem Zuführelement und dem Dampfverteilelement gewährleistet werden.

Nach einer vorteilhaften Weiterbildung der Vorrichtung ist vorgesehen, dass die Vorrichtung eine mit einem an der Dampfbehandlungseinheit angeordneten Auslasselement zur Reinigung eines Abschnitts der Austrittseinheit zusammenwirkende Auslasseinheit zum Ablassen von Heizfluid aus der Dampferzeugungseinheit aufweist. Die Auslasseinheit ist derart ausgebildet, dass das Heizfluid und/oder der Dampf aus der Dampferzeugungseinheit über das Auslasselement auf den Abschnitt der Austrittseinheit, d.h. Bereiche der Austrittseinheit, die im Betrieb der Vorrichtung mit der fluiden Komponente oder der Lebensmittelgrundmasse in Kontakt kommen, geleitet werden können. Das Auslasselement weist hierzu vorzugsweise mindestens eine Öffnung zur Abgabe des Heizfluids und/oder des Dampfs auf. Das Auslasselement ist beispielsweise rohrartig mit einem kreisförmigen, polygonförmigen oder ellipsenförmigen Querschnitt ausgebildet. Vorzugsweise weist die Auslasseinheit eine mit dem Auslasselement und der Dampferzeugungseinheit verbundene erste Heizfluidleitung zum Transport des Heizfluids und/oder Dampfs auf. Die Auslasseinheit kann auch mit mehreren, z.B. zwei an der Dampfbehandlungseinheit angeordneten Auslasselementen zusammenwirken. Die mit dem Auslasselement zusammenwirkende Auslasseinheit ermöglicht auf vorteilhafte Weise die Reinigung eines Bereichs der Austrittseinheit. Dadurch können die Bereiche der Austrittseinheit, die mit einer ersten fluiden Komponente oder einer ersten Lebensmittelgrundmasse in Kontakt kommen gereinigt werden, wodurch einer Kontamination einer nachfolgend hergestellten zweiten fluiden Komponente mit von der ersten fluiden Komponente verschiedenen Bestandteilen oder einer zweiten Lebensmittelgrundmasse mit von der ersten Lebensmittelgrundmasse verschiedenen Komponenten entgegengewirkt wird.

Nach einer vorteilhaften Ausgestaltung der Vorrichtung ist vorgesehen, dass die Vorrichtung eine mit der Dampferzeugungseinheit verbundene Anschlusseinheit mit einem Anschlusselement zur Anbindung einer Reinigungseinheit aufweist. Die Anschlusseinheit weist vorzugsweise eine mit der Dampferzeugungseinheit verbundene zweite Heizfluidleitung und dritte Heizfluidleitung auf. Die zweite und dritte Heizfluidleitungen sind derart an der Dampferzeugungseinheit angeordnet, dass die zweite Heizfluidleitung Heizfluid an das Anschlusselement leitet und die dritte Heizfluidleitung Dampf an das Anschlusselement leitet. Das Anschlusselement ist derart ausgebildet, dass das Heizfluid und/oder der Dampf an die an dem Anschlusselement anordbare Reinigungseinheit übertragen wird. Die Reinigungseinheit weist eine Sprüheinheit zur Abgabe des Heizfluids und/oder Dampfs und ein die Sprüheinheit mit dem Anschlusselement verbindendes, schlauchartiges Verbindungselement, z.B. einen Schlauch auf. Die Sprüheinheit weist ferner ein Griffelement und ein Betätigungselement zur manuellen Aktivierung der Abgabe des Heizfluids und/oder des Dampfs auf. Die Anschlusseinheit ermöglicht die Anbindung einer Reinigungseinheit, mit der auf vorteilhafte Weise Teile und/oder Bereiche der Vorrichtung und die Umgebung, z.B. Arbeitsflächen, Fußböden oder Wände einer Küche, in der die Vorrichtung angeordnet ist, gereinigt werden können. Durch das schlauchartige Verbindungselement kann die Sprüheinheit relativ zur Vorrichtung, bewegt werden und beispielsweise zur Reinigung einer Küche, insbesondere einer Großküche eingesetzt werden. Zusätzliche Kosten für Reinigungsmittel können durch die entkeimenden Eigenschaften des heißen Dampfs reduziert werden.

Zur Reinigung des Abschnitts der Austrittseinheit kann das Heizfluid aus der Dampferzeugungseinheit abgelassen werden, sodass das Heizfluid über die erste Heizfluidleitung an das Austrittselement geleitet wird. Die zweite Heizfluidleitung kann derart mit der ersten Heizfluidleitung verbunden sein, dass über ein manuelles Betätigungselement, z.B. einen Druckschalter, Heizfluid von der zweiten Heizfluidleitung in die erste Heizfluidleitung geleitet wird. Hierdurch kann jederzeit Heizfluid zur Reinigung des Abschnitts der Austrittseinheit aus der Dampferzeugungseinheit eingesetzt werden, ohne das Heizfluid vollständig aus der Dampferzeugungseinheit ablassen zu müssen. Die Austrittseinheit, insbesondere die Austrittselemente und das Dampfverteilelement können hierdurch flexibler gereinigt werden.

Die zweite und/oder dritte Heizfluidleitungen sind bevorzugt derart mit der Dampfleitung verbunden, dass über die Austrittseinheit ebenfalls Heizfluid und/oder Dampf abgebbar ist. Besonders bevorzugt sind die zweite und/oder dritte Heizfluidleitung in einem Bereich zwischen der Heizeinrichtung und dem Einlass in die Austrittseinheit mit der Dampfleitung verbunden. Die Verbindung der zweiten und/oder dritten Heizfluidleitung gewährleistet, dass neben dem erhitzten Dampf auch Heizfluid, z.B. heißes Wasser und/oder Dampf in die bevorzugt in dem Mischbehälter angeordnete fluide Komponente oder Lebensmittelgrundmasse eingebracht werden kann. Dies ist besonders für die Herstellung einer Fruchteisgrundmasse oder einer Sorbetgrundmasse vorteilhaft, da die hohe relative Feuchte des Dampfs oder des Heizfluids vorteilhaft für die Geschmacksbildung ist.

Nach einer vorteilhaften Weiterbildung der Vorrichtung ist vorgesehen, dass die Dampfbehandlungseinheit eine Dampfleitung mit einer in der Heizeinrichtung in Längsachsenrichtung der Dampfleitung angeordneten Windung aufweist. Die Dampfleitung ist rohrartig ausgebildet und erstreckt sich bevorzugt mit einem kreisförmigen, polygonförmigen oder ellipsenförmigen Querschnitt von dem Auslass der Dampferzeugungseinheit bis zu dem Einlass der Austrittseinheit und besonders bevorzugt bis zu dem Dampfverteilelement der Austrittseinheit. In der Heizeinrichtung ist die Dampfleitung von den Heizkörpern umgeben und grenzt mit einer Außenwand an die Heizkörper an. Die Dampfleitung ist im Bereich der Heizeinrichtung derart spiralförmig ausgebildet, dass die Dampfleitung mindestens eine Windung, bevorzugt mehrere Windungen aufweist. Die Windungen sind bevorzugt konzentrisch zueinander angeordnet und weisen besonders bevorzugt den gleichen Durchmesser auf. Die Windung weist vorzugsweise einen Durchmesser von bis zu 150 mm, bevorzugt bis zu 125 mm, besonders bevorzugt bis zu 100 mm auf. Die Heizeinrichtung erstreckt sich in Abhängigkeit der Anzahl an Windungen vorzugsweise über eine Länge von bis zu 250 mm, bevorzugt, bis zu 200 mm, besonders bevorzugt bis zu 150 mm. Beispielsweise weist die Heizeinrichtung mit 12 Windungen eine Länge von 120 mm auf. Durch die Dampfleitung wird der Dampf ausgehend von der Dampferzeugungseinheit durch die Verengung, die Heizeinrichtung und die Austrittseinheit geleitet, bis der Dampf über die Austrittsöffnung abgegeben wird. Der Arbeitsdruck der Dampferzeugungseinheit beträgt vorzugsweise bis zu 10 bar, bevorzugt bis zu 9 bar, besonders bevorzugt bis zu 8,5 bar, sodass der Dampf die Druckverluste der Dampfleitung überwindet.

Bevorzugt weist die Dampfleitung eine zwischen dem Auslass der Dampferzeugungseinheit und der Heizeinrichtung angeordnete düsenartige Verengung zur Erhöhung der Strömungsgeschwindigkeit des Dampfes auf. Die düsenartige Verengung ist vorzugsweise als nichterweiterte Düse oder bevorzugt als erweiterte Düse ausgebildet. Der Querschnitt der Dampfleitung nimmt in der düsenartigen Verengung ab und steigt bevorzugt wieder auf die ursprüngliche Größe. Die Dampfleitung weist beispielsweise einen Durchmesser von 10 mm auf. In der düsenartigen Verengung sinkt der Durchmesser z.B. auf 5 mm und steigt danach wieder auf 10 mm. Durch die Windung wird die Oberfläche der Dampfleitung, die mit den Heizkörpern in Kontakt ist vergrößert. Die Begrenzung der Länge der Heizeinrichtung und des Durchmessers der Windungen ermöglicht dennoch eine kompakte Bauweise der Dampfbehandlungseinheit. Die düsenartige Verengung wirkt einer unerwünschten Leitung von nicht verdampften Heizfluids durch die Dampfleitung entgegen.

Die Auflagefläche der Vorrichtung, auf der der Mischbehälter anordbar ist, kann beispielsweise entlang einer parallel zur Hauptachse der Austrittseinheit angeordneten Bewegungsbahn verstellt werden, um den Mischbehälter relativ zur Hauptebene zu bewegen. Nach einer vorteilhaften Ausgestaltung der Vorrichtung ist jedoch vorgesehen, dass die Austrittseinheit entlang ihrer Hauptachse höhenverstellbar ist. Die Austrittseinheit ist bevorzugt relativ zur Hauptebene zwischen den vorstehend beschriebenen Grund- und Betriebsstellung verstellbar. Bevorzugt sind die Auslasseinheit und der Temperaturfühler mit der Austrittseinheit verstellbar. Die Verstellung der Austrittseinheit entlang ihrer Hauptachse ermöglicht ein komfortables Vermengen von Zutaten der fluiden Komponente oder Komponenten der Lebensmittelgrundmasse im Mischbehälter. Ferner wird durch eine Verstellung der Austrittseinheit nach der Herstellung der fluiden Komponente oder der Lebensmittelgrundmasse von der Betriebs- in die Grundstellung das Risiko, dass eine die Vorrichtung bedienende Fachkraft mit erhitzten Abschnitten der Austrittseinheit in Kontakt kommt, reduziert und somit unerwünschten Verbrühungen oder Verbrennungen entgegengewirkt sowie die Arbeitssicherheit erhöht.

Nach einer vorteilhaften Weiterbildung der Vorrichtung ist vorgesehen, dass die Dampfbehandlungseinheit und/oder die Austrittseinheit eine Regeleinheit zur Einstellung des Dampfdrucks in der Dampfbehandlungseinheit und/oder der Austrittseinheit aufweist. Die Regeleinheit ist derart ausgebildet, dass der Dampfdruck in der Dampfbehandlungseinheit und/oder der Austrittseinheit, insbesondere in der Dampfleitung geregelt werden kann. Bevorzugt wird der Dampfdruck in Abhängigkeit der fluiden Komponente, insbesondere der Bestandteile der fluiden Komponente oder der Lebensmittelgrundmasse, insbesondere der Komponenten der Lebensmittelgrundmasse geregelt. Beispielsweise ist die Regeleinheit als manuelles Druckventil ausgebildet. Durch die Regeleinheit kann der Dampf noch besser an die Bestandteile der fluiden Komponente oder die Komponenten der Lebensmittelgrundmasse angepasst werden.

Nach einer vorteilhaften Weiterbildung der Vorrichtung ist vorgesehen, dass die Vorrichtung eine der Austrittseinheit zugeordnete mechanische Mischeinheit aufweist.

Die Mischeinheit ist bevorzugt mit der Austrittseinheit verstellbar. Die Mischeinheit ist derart ausgebildet, dass die Bestandteile der fluiden Komponente oder die Komponenten der Lebensmittelgrundmasse zerkleinert und/oder untereinander vermischt werden. Beispielsweise ist die Mischeinheit ein Stabmixer. Durch die Mischeinheit kann die Vorrichtung noch flexibler eingesetzt werden. Alle Prozessschritte zur Herstellung einer Lebensmittelgrundmasse, insbesondere einer Speiseeisgrundmasse, sind in der Vorrichtung durchführbar. Dadurch können die fluide Komponente und die Lebensmittelgrundmasse noch schneller hergestellt werden, da auf ansonsten anfallende Transportschritte verzichtet werden kann.

Nach einer vorteilhaften Ausgestaltung der Vorrichtung ist vorgesehen, dass die Vorrichtung ein die Dampfleitung in Strömungsrichtung des Dampfes umgebendes Dämmelement aufweist. Die Dampfleitung ist bevorzugt im Bereich der Heizeinrichtung von dem Dämmelement umgeben. Das Dämmelemente ist derart ausgebildet, dass Wärmeleitung von der erhitzen Dampfleitung an das Gehäuse verringert wird. Besonders bevorzugt ist das Dämmelement innerhalb der Windung oder ggf. Windungen der Dampfleitung angeordnet. Vorzugsweise weist das Gehäuse im Bereich der Heizeinrichtung eine Temperatur von maximal 50 °C, bevorzugt maximal 40 °C, besonders bevorzugt maximal 30 °C auf. Das Dämmelement ist beispielsweise plattenartig, z.B. als Wärmedämmplatte oder bevorzugt faserartig, z.B. als Dämmwolle ausgebildet. Vorzugsweise ist das Dämmelement aus mineralfasern, bevorzugt synthetischen Mineralfasern gebildet. Besonders bevorzugt ist das Dämmelement aus Steinwolle gebildet. Durch das Dämmelement kann die Betriebssicherheit erhöht werden, indem Verbrennungen und/oder Verbrühungen durch den Kontakt mit zu heißen Oberflächen der Vorrichtung vermieden werden.

Die Vorrichtung weist vorzugsweise ein Gehäuse auf. Die Dampferzeugungseinheit und die Dampfbehandlungseinheit sind bevorzugt in dem Gehäuse angeordnet. Die Auslasseinheit und die Anschlusseinheit sind vorzugsweise an und/oder in dem Gehäuse angeordnet. Alle weiteren vorstehend beschriebenen Bauteile der Vorrichtung sind bevorzugt ebenfalls an dem Gehäuse angeordnet. Die Vorrichtung weist besonders bevorzugt eine Steuereinheit zur Steuerung des Herstellungsprozesses der fluiden Komponente oder der Lebensmittelgrundmasse auf. Die Steuereinheit ist vorzugsweise als programmierbare Einheit, z.B. als Computer ausgebildet und bevorzugt am Gehäuse angeordnet. Ferner steht die Steuereinheit bevorzugt mit Sensoren, z.B. Sensoren zur Temperaturüberwachung der Heizkörper, Sensoren zur Überwachung der Dampferzeugungseinheit oder dem Temperaturfühler in Verbindung. Darüber hinaus steht die Steuereinheit bevorzugt mit Steuermitteln für die Dampferzeugungseinheit, Steuermitteln für die Dampfleitung, Steuermitteln für die Heizfluidleitungen der Auslasseinheit und der Anschlusseinheit in Verbindung. Steuermittel für die Dampfleitung sind beispielsweise Ventile, z.B. Magnetventile.

Die Steuereinheit ist vorzugsweise derart ausgebildet, dass sie in Abhängigkeit von Sensorsignalen ein vorgebbares Programm, z.B. ein Steuerprogramm ausführt. Das vorgebbare Programm weist beispielsweise Einstellungsmöglichkeiten für vorgegebene Prozesszeiten, Einstellungsmöglichkeiten für den Arbeitsdruck der Dampferzeugungseinheit oder Einstellungsmöglichkeiten für unterschiedliche Prozessabläufe, wie z.B. das Einschalten der Heizkörper oder das Öffnen und Schließen von Ventilen auf. Ferner steht die Steuereinheit bevorzugt mit Sicherheitsvorrichtungen, z.B. der Lichtschranke oder Endschaltern zur Erfassung der Position der Auflagefläche, der Mischeinheit und/oder der Austrittseinheit in Verbindung. Darüber hinaus weist die Steuereinheit vorzugsweise ein Anzeigeelement auf, das bevorzugt derart ausgebildet ist, dass ein Bediener der Vorrichtung das Steuerprogramm ohne weitere Peripheriegeräte, z.B. eine Maus oder eine Tastatur bedienen kann. Beispielsweise ist das Anzeigeelement ein Touchscreen.

Die Steuereinheit erlaub bspw. komfortables Herstellen unterschiedlicher fluider Komponenten oder Lebensmittelgrundmassen entsprechend der Bestandteile oder Komponenten. Einstellbare Parameter, wie der einstellbare Wert der Temperatur der fluiden Komponente oder der Temperatur der Lebensmittelgrundmasse, die Erwärmzeit und die Prozesszeit, aber auch die ersten und zweiten Zeitintervalle sind im vorgebbaren Steuerprogramm speicherbar. Für verschiedene fluide Komponenten oder Lebensmittelgrundmassen sind z.B. mehrere Rezepte speicherbar, die die einstellbaren Parameter speichern. Beispielsweise ist ein erstes Rezept zur Herstellung von Schokoladensauce gespeichert, ein zweites Rezept für Fruchteis und ein drittes Rezept für Joghurt. Die Steuereinheit ermöglicht eine schnelle und einfache Bedienung der Vorrichtung und steigert durch speicherbare Rezepte den Komfort des Bedienpersonals

Nachstehend wird ein Ausführungsbeispiel der Erfindung mit Bezug auf die Zeichnungen erläutert. In den Zeichnungen zeigen:
Fig.1a eine perspektivische Ansicht einer ersten Ausführungsform einer Vorrichtung zur Herstellung einer fluiden Komponente einer Lebensmittelgrundmasse oder einer Lebensmittelgrundmasse mit einer in einer Grundstellung angeordneten Austrittseinheit;
Fig.1b eine perspektivische Ansicht auf die Vorrichtung von Fig. 1a mit der in einer Betriebsstellung angeordneten Austrittseinheit;
Fig. 2 eine Seitenansicht auf die Vorrichtung von Fig. 1a und 1b mit einem seitlich offenen Gehäuse;
Fig.3 eine schematische Schnittansicht eines Abschnitts einer Dampfbehandlungseinheit der Vorrichtung von Fig. 1a bis Fig. 2;
Fig. 4 eine Explosionsdarstellung einer Austrittseinheit der Vorrichtung von Fig. 1a bis Fig. 3;
Fig. 5 eine perspektivische Ansicht einer zweiten Ausführungsform einer Vorrichtung zur Herstellung einer fluiden Komponente einer Lebensmittelgrundmasse oder einer Lebensmittelgrundmasse;
Fig. 6a eine Frontansicht der Vorrichtung von Fig. 5 mit einer in der Betriebsstellung angeordneten Austrittseinheit und
Fig. 6b eine Frontansicht der Vorrichtung von Fig. 5 und 6 mit der in der Grundstellung angeordneten Austrittseinheit.

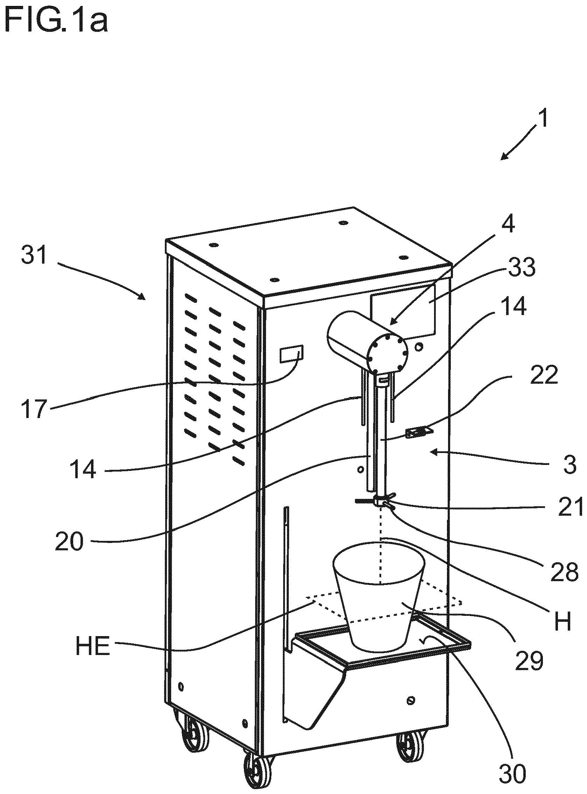

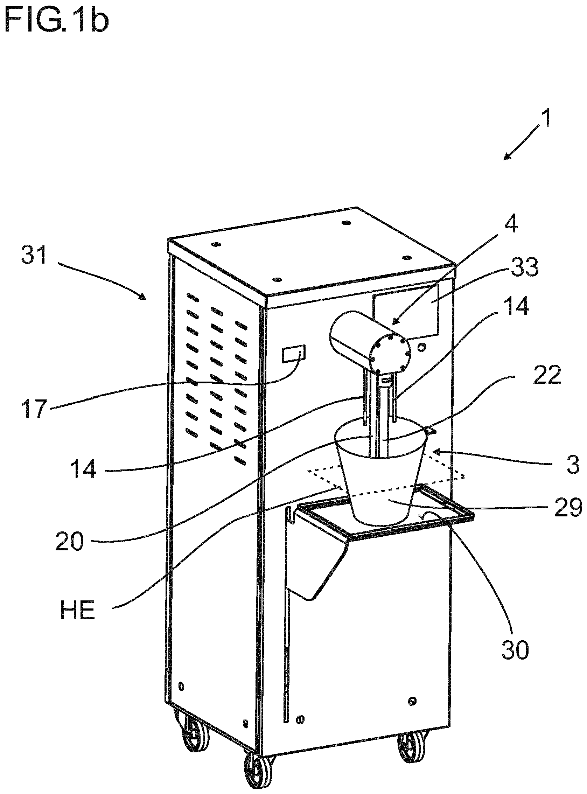

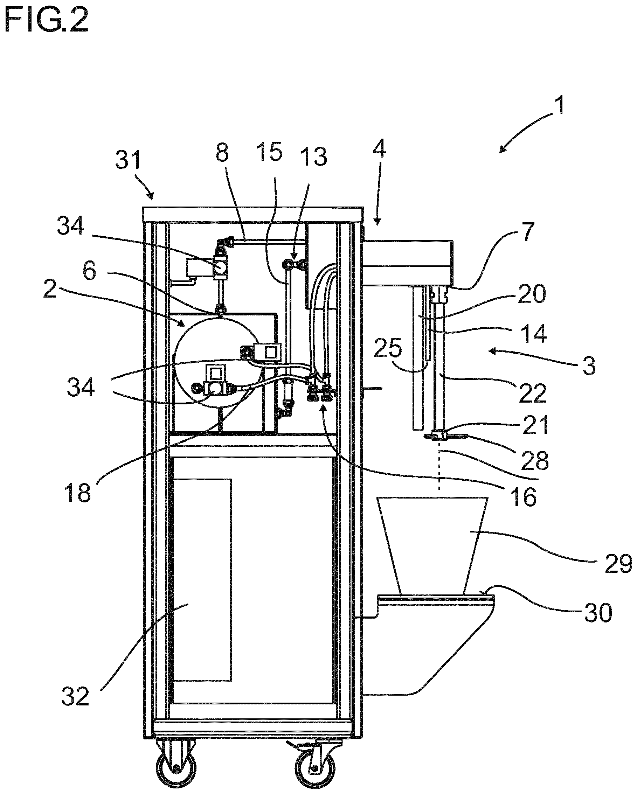

Fig. 1 bis Fig.4 zeigen eine erste Ausführungsform einer Vorrichtung 1 zur Herstellung einer fluiden Komponente einer Lebensmittelgrundmasse oder zur Herstellung einer Lebensmittelgrundmasse. Die Vorrichtung 1 weist eine Dampferzeugungseinheit 2, eine Austrittseinheit 3 und eine Dampfbehandlungseinheit 4 mit einer Heizeinrichtung 5 auf.

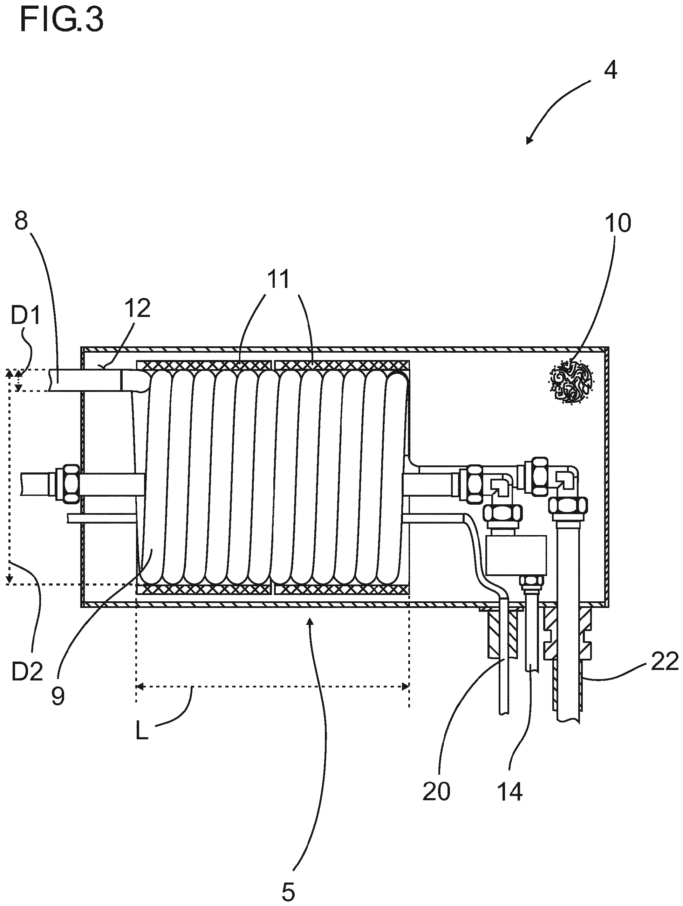

Die Dampfbehandlungseinheit 4 ist zwischen einem Auslass 6 der Dampferzeugungseinheit 2 und einem Einlass 7 der Austrittseinheit 3 angeordnet. Neben der Heizeinrichtung 5 weist die Dampfbehandlungseinheit 4 eine Dampfleitung 8 mit mehreren, hier zwölf Windungen 9 und ein die Dampfleitung 8 in der Heizeinrichtung 5 umgebendes Dämmelement 10 (in Fig. 3 ausschnittsweise dargestellt) auf. Die Heizeinrichtung 5 weist zwei Heizkörper in Form von Bandheizungen 11 auf. Die Dampfleitung 8 weist einen Durchmesser D1 von hier 10 mm auf. Die Heizeinrichtung 5 erstreckt sich über eine Länge L von 120 mm. Die Windungen 9 sind konzentrisch zueinander angeordnet und weisen einen Durchmesser D2 von hier 100 mm auf. Die Dampfleitung 8 ist in der Heizeinrichtung 5 von den Bandheizungen 11 umgeben und grenzt mit einer Außenwand 12 an diese an.

Die Vorrichtung 1 weist eine Auslasseinheit 13 mit zwei jeweils an der Dampfbehandlungseinheit 4 angeordneten Auslasselementen 14 auf. Die Auslasseinheit 13 weist eine mit den Auslasselementen 14 und der Dampferzeugungseinheit 2 verbundene erste Heizfluidleitung 15 zum Transport von Heizfluid und/oder Dampf auf.

Ferner weist die Vorrichtung 1 eine mit der Dampferzeugungseinheit 2 verbundene Anschlusseinheit 16 mit einem Anschlusselement 17 zur Anbindung einer Reinigungseinheit auf. Die Anschlusseinheit 16 weist eine zweite Heizfluidleitung 18 zur Leitung von Dampf aus der Dampferzeugungseinheit 2 an das Anschlusselement 17 und dritte Heizfluidleitung 19 zur Leitung des Dampfs von der Dampferzeugungseinheit 2 an das Anschlusselement 17 auf. Über das Anschlusselement 17 ist das Heizfluid und/oder der Dampf an die an dem Anschlusselement 17 anordbare Reinigungseinheit übertragbar.

An der Dampfbehandlungseinheit 4 ist ein Temperaturfühler 20 zur Überwachung der Temperatur der fluiden Komponenten oder der Lebensmittelgrundmasse angeordnet.

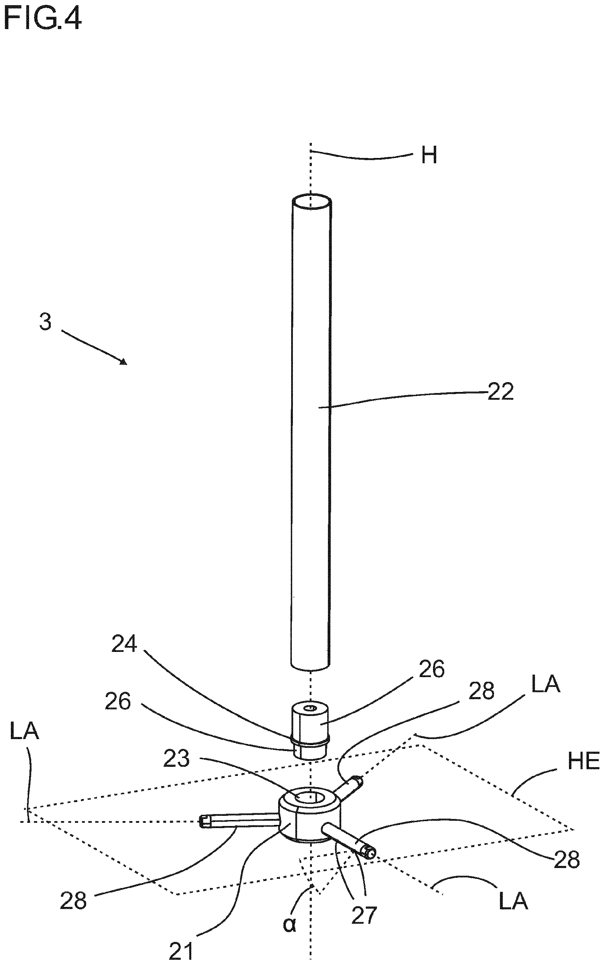

Die Austrittseinheit 3 weist ein Dampfverteilelement 21 und ein sich entlang einer Hauptachse H der Austrittseinheit 3 zwischen der Dampfbehandlungseinheit 4 und dem Dampfverteilelement 21 erstreckendes rohrartiges Zuführelement 22 zur Weiterleitung von mittels der Dampfbehandlungseinheit 4 erhitztem Dampf in das Dampfverteilelement 21 auf (vgl. Fig. 4). Das Zuführelement 22 und das Dampfverteilelement 21 weisen jeweils einen ersten Kopplungsabschnitt 23 in Form eines Innengewindes auf. Die Austrittseinheit 3 weist ferner ein Kopplungselement 24 in Form eines Doppelnippels mit zwei jeweils mit einem der ersten Kopplungsabschnitte 23 in Eingriff bringbaren zweiten Kopplungsabschnitte 26 in Form von Außengewinden auf.

An dem Dampfverteilelement 21 sind drei jeweils zwei Austrittsöffnungen 27 aufweisende Austrittselemente 28 angeordnet. Die Austrittselemente 28 sind in radialer Richtung zur Hauptachse H angeordnet, sodass Längsachsen LA der Austrittselemente 28 sich in einem Schnittpunkt auf der Hauptachse H schneiden. Die Austrittsöffnungen 27 sind in Umfangsrichtung zu der Hauptachse H angeordnet. Die beiden Austrittsöffnungen 27 eines Austrittselements 28 sind in Längsachsenrichtung beabstandet zueinander angeordnet. Die Austrittsöffnungen 27 sind in einem Winkel α von bis zu 25 °, hier 22,5 ° zur einer durch die Oberfläche der fluiden Komponente oder der Lebensmittelgrundmasse gebildete und senkrecht zur Hauptachse H angeordneten Hauptebene HE angeordnet.

Zur Zubereitung der fluiden Komponente der Lebensmittelgrundmasse oder der Lebensmittelgrundmasse dient ein an der Vorrichtung 1 anordbarer Mischbehälter 29, innerhalb dem die fluide Komponente oder die Lebensmittelgrundmasse zubereitet wird. Der Mischbehälter 29 weist ein Volumen von 15 L auf. Der Mischbehälter ist auf einer Auflagefläche 30 eines Gehäuses 31 der Vorrichtung 1 angeordnet. Die Auflagefläche 30 ist entlang der Hauptachse H der Austrittseinheit 3 höhenverstellbar, wodurch die Austrittseinheit 3 entlang ihrer Hauptachse H relativ zur Hauptebene HE zwischen einer in Fig. 1a dargestellten Grundstellung und einer in Fig 1b dargestellten Betriebsstellung verstellbar ist. Die Auflagefläche 30 ist zur Höhenverstellung an einer Linearschiene mit einem Antrieb, hier einem elektrischen Motor angeordnet.

An dem Gehäuse 31 sind alle vorstehend beschriebenen Bauteile der Vorrichtung 1 angeordnet. Die Dampferzeugungseinheit 2 und die Dampfbehandlungseinheit 4 sind in dem Gehäuse 31 angeordnet.

Die Vorrichtung 1 weist ferner eine an dem Gehäuse 31 angeordnete Steuereinheit 32 mit einem als Touchscreen 33 ausgebildeten Anzeigeelement auf. Die Steuereinheit 32 steht mit Sensoren zur Temperaturüberwachung der Bandheizungen 11, Sensoren zur Überwachung der Dampferzeugungseinheit 2 und dem Temperaturfühler 20 in Verbindung. Darüber hinaus steht die Steuereinheit 32 mit Steuermitteln für die Dampferzeugungseinheit 2, Steuermitteln für die Dampfleitung 8, Steuermitteln für die Heizfluidleitungen 15, 18, 19 in Verbindung. Die Steuermittel für die Dampfleitung 8 und die Heizfluidleitungen 15, 18, 19 sind als Magnetventile 34 ausgebildet.

Darüber hinaus steht die Steuereinheit 32 mit Sicherheitsvorrichtungen, z.B. der Lichtschranke oder Endschaltern zur Erfassung der Position der Auflagefläche 30 oder der Austrittseinheit 3 in Verbindung.

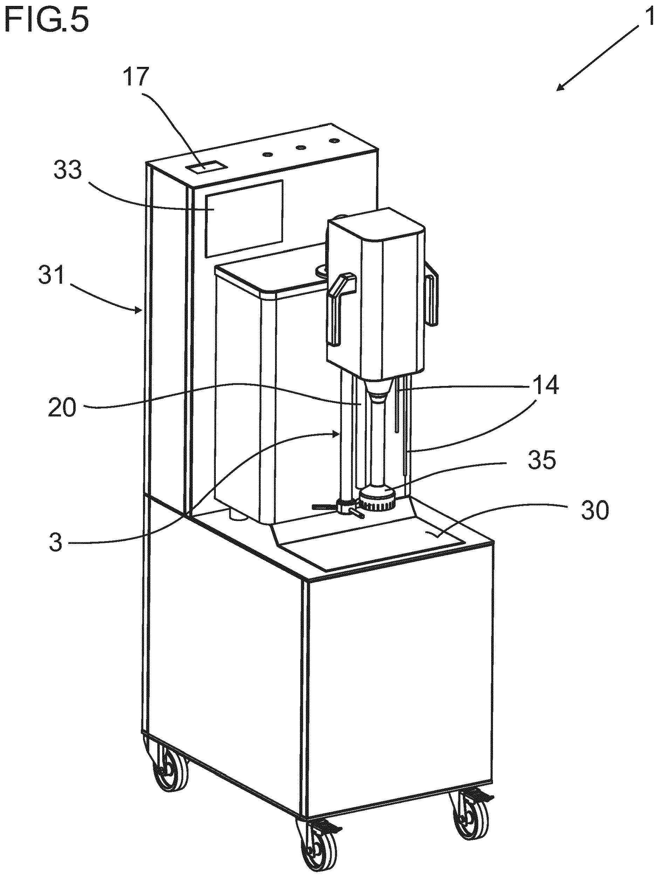

Für die in Fig. 5 bis 6b dargestellte Vorrichtung 1a, welche eine zweite Ausführungsform der Vorrichtung 1 darstellt werden für gleiche Bauteile gleiche Bezugszeichen verwendet. Die Vorrichtung 1a unterscheidet sich von der Vorrichtung 1 gemäß Fig.1 bis Fig. 4 durch ein noch kompakter ausgebildetes Gehäuse 31 und eine zusätzliche mechanische Mischeinheit 35.

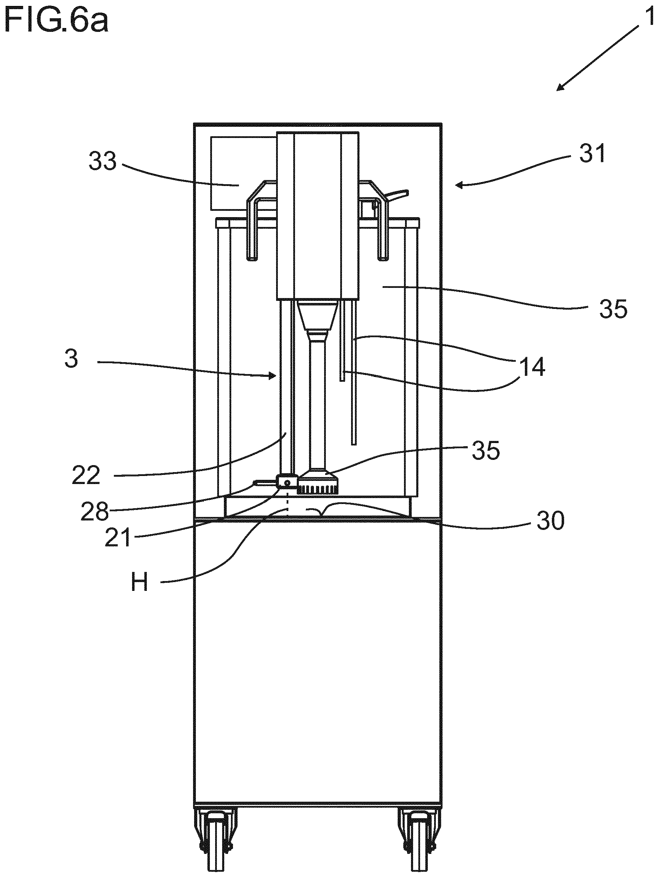

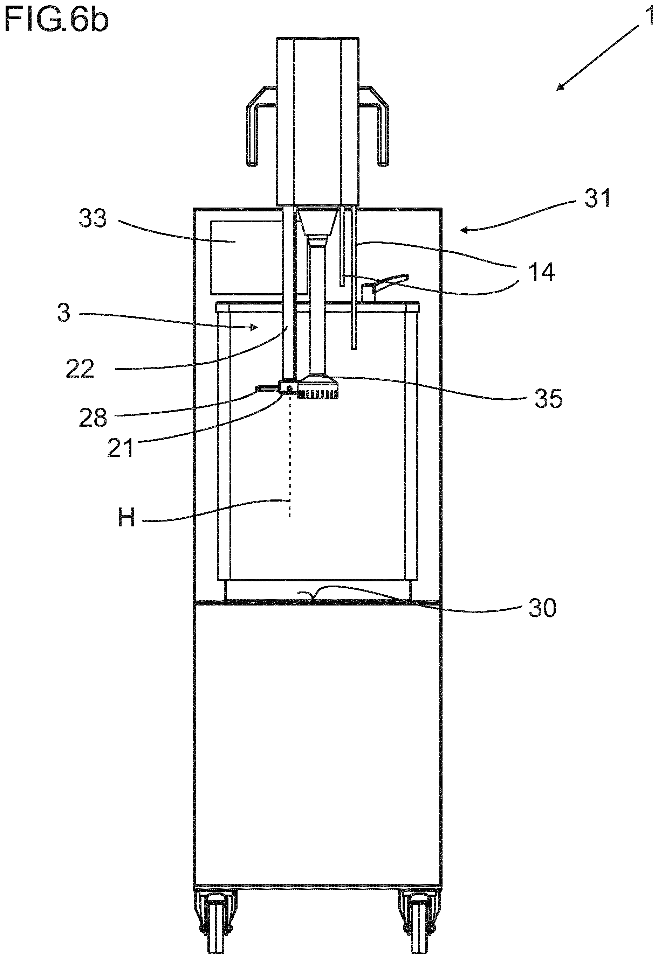

Darüber hinaus ist die Austrittseinheit 3 der Vorrichtung 1a direkt entlang der Hauptachse H mit der mechanischen Mischeinheit 35 zwischen der in Fig 6a gezeigten Betriebsstellung und der in Fig. 6b dargestellten Grundstellung verstellbar.

Zur Herstellung einer fluiden Komponente oder einer Lebensmittelgrundmasse werden zuerst alle Prozessparameter, beispielsweise ein einstellbarer Wert der Temperatur der fluiden Komponente, eine Erwärmzeit oder eine Prozesszeit in Abhängigkeit von Bestandteilen der fluiden Komponente eingestellt. Die Steuereinheit 32 ist dazu ausgebildet mehrere Rezepte zur Herstellung einer fluiden Komponente einer Lebensmittelgrundmasse oder zur Herstellung einer Lebensmittelgrundmasse zu speichern, sodass die eingestellten Prozessparameter abgespeichert werden können. Mit der Vorrichtung 1 kann insbesondere als erste fluide Komponente einer Lebensmittelgrundmasse ein geschmacksgebendes Konzentrat hergestellt werden, das anschließend mit mindestens einer zweiten Komponente zu einer Lebensmittelgrundmasse, z.B. einer Suppengrundmasse, einer Teiggrundmasse, einer Püreegrundmasse, einer Frucht-,Obst- oder Gemüsegrundmasse, insbesondere einer Speiseeisgrundmasse verarbeitet werden kann. Nachfolgend werden die Verfahren zur Herstellung einer fluiden Komponente und einer Lebensmittelgrundmasse beispielhaft für ein geschmacksgebendes Konzentrat einer Speiseeisgrundmasse und eine Speiseeisgrundmasse beschrieben.

Zuerst werden die Bestandteile, z.B. Wasser, Milch oder Joghurt, Fette, Süßungsmittel oder Eier und eine geschmacksgebende Zutat, z.B. eine Speiseeispaste des geschmacksgebenden Konzentrats in dem Mischbehälter 29 vermengt. Bei der zweiten Ausführungsform der Vorrichtung 1 kann die mechanische Mischeinheit zum Beschleunigen der Vermengung der Bestandteile verwendet werden. Die Austrittseinheit 3 wird relativ zur Hauptebene HE von der Grundstellung in die Betriebsstellung verstellt. Die Steuereinheit 32 erfasst in Verbindung mit den Sicherheitsvorrichtungen, ob der Mischbehälter 29 unter der Austrittseinheit 3 angeordnet ist. Sobald die Austrittseinheit 3 in der Betriebsstellung und die Austrittsöffnungen 27 unter der Hauptebene HE und innerhalb des geschmacksgebenden Konzentrats angeordnet sind, wird das Magnetventil 43 an der Dampfleitung 8 geöffnet und der durch die Dampferzeugungseinheit 2 bereitgestellte Dampf wird über den Auslass 6 der Dampferzeugungseinheit 2 in die Dampfbehandlungseinheit 4 geleitet. Der Dampf strömt durch die Windungen 9 in der Heizeinrichtung 5 und wird mittels der Bandheizungen 11 erhitzt, wodurch die relative Feuchtigkeit des Dampfs reduziert wird. Über den Einlass 7 strömt der erhitzte Dampf durch das Zuführelement 22 in das Dampfverteilelement 21 und wird in diesem auf die Austrittselemente 28 verteilt.

Der erhitzte Dampf wird durch die Austrittsöffnungen 27 in Umfangsrichtung zur Hauptachse H der Austrittseinheit 3 und in dem Winkel α von 22,5 ° zur Hauptebene HE mit einer Dampftemperatur von ca. 210-230 °C in das geschmacksgebende Konzentrat eingebracht, sodass das geschmacksgebende Konzentrat in dem Mischbehälter 29 in Rotation versetzt wird. Durch die Einbringung des erhitzten Dampfs in das geschmacksgebende Konzentrat wird dieses aufgeheizt.

Die Temperatur des geschmacksgebenden Konzentrats wird mittels des innerhalb des geschmacksgebenden Konzentrats angeordneten Temperaturfühlers 20 überwacht. Die Einbringung des erhitzten Dampfs in das geschmacksgebende Konzentrat wird gestoppt, sobald die Temperatur des geschmacksgebenden Konzentrats den eingestellten Wert erreicht.

Zur Herstellung der Speiseeisgrundmasse wird dem geschmacksgebenden Konzentrat mit einer hohen ersten Temperatur als zweite Komponente pasteurisierte Milch mit einer im Vergleich zur ersten Temperatur niedrigeren zweiten Temperatur in einem Volumenverhältnis von bis zu 5:1 von Milch zu geschmacksgebendem Konzentrat beigegeben. Hier werden 2 L geschmacksgebenden Konzentrat 8 L pasteurisierte Milch beigegeben. Bei der Vorrichtung 1 wird der Mischbehälter 29 verstellt und eine als Handgerät ausgebildete Mischeinheit 35 eingesetzt, um die Milch und das Konzentrat zu vermischen. Bei der Vorrichtung 1a kann die Mischeinheit 35 manuell oder mittels der Steuereinheit 32 nach Stoppen der Dampfeinbringung aktiviert werden, ohne den Mischbehälter 29 zu verstellen. Die Speiseisgrundmasse wird anschließend in einer Eismaschine zu Speiseeis verarbeitet.

Die Vorrichtung 1 ist ebenfalls dazu ausgebildet, Schoko- oder Currysauce herzustellen. Für die Herstellung von Schokosaue wird der Dampf nach Erreichen des eingestellten Werts der Temperatur der Schokosauce z.B. für eine Prozesszeit von 10 Minuten intervallartig in die Schokosauce eingebracht.

Alternativ kann die Vorrichtung 1 auch zum Garen von Nudeln oder Suppe eingesetzt werden. Hierfür kann als fluide Komponente Wasser in dem Mischbehälter 29 erhitzt werden und die Erwärmzeit in Abhängigkeit von den Nudeln oder der Suppe eingestellt werden.

Zur Reinigung der Bereiche der Austrittseinheit 3, die im Betrieb der Vorrichtung 1 mit der fluiden Komponente oder der Lebensmittelgrundmasse in Kontakt gekommen sind, wird Heizfluid oder Dampf aus der Dampferzeugungseinheit 2 über die erste Heizfluidleitung 15 an die Auslasselemente 14 geleitet und über Auslassöffnungen 25 der Auslasselemente 14 auf die vorstehend beschriebenen Bereiche der Austrittseinheit gesprüht.

Nach dem Betrieb der Vorrichtung 1 wird die Reinigungseinheit an das Anschlusselement 17 der Anschlusseinheit 16 angeschlossen. Mit dem durch die zweite und dritte Heizfluidleitung 18, 19 aus der Dampferzeugungseinheit 2 über das Anschlusselement 17 an die Reinigungseinheit geleiteten Dampf oder Heizfluid kann die Peripherie der Vorrichtung 1, z.B. Arbeitsutensilien, -flächen und Fußböden einer Küche, insbesondere Großküche gereinigt werden.

Durch das Erhitzten mittels Dampfs kann die fluide Komponente schnell und gleichzeitig hygienisch hergestellt werden, wodurch die Herstellung der Lebensmittelgrundmasse beschleunigt wird, nachdem nicht die gesamte Lebensmittelgrundmasse erhitzt werden muss.

Der Schutzbereich der vorliegenden Erfindung ist durch die Patentansprüche gegeben und wird durch die in der Beschreibung erläuterten oder den Figuren gezeigten Merkmale nicht beschränkt.

### Bezugszeichenliste

- 1: Vorrichtung
- 2: Dampferzeugungseinheit
- 3: Austrittseinheit
- 4: Dampfbehandlungseinheit
- 5: Heizeinrichtung
- 6: Auslass der Dampferzeugungseinheit
- 7: Einlass der Austrittseinheit
- 8: Dampfleitung
- 9: Windungen der Dampfleitung
- 10: Dämmelement
- 11: Bandheizung
- 12: Außenwand der Dampfleitung
- 13: Auslasseinheit
- 14: Auslasselement
- 15: erste Heizfluidleitung
- 16: Anschlusseinheit
- 17: Anschlusselement
- 18: zweite Heizfluidleitung
- 19: dritte Heizfluidleitung
- 20: Temperaturfühler
- 21: Dampfverteilelement
- 22: Zuführelement
- 23: erster Kopplungsabschnitt
- 24: Kopplungselement
- 25: Auslassöffnung des Auslasselements
- 26: zweiter Kopplungsabschnitt
- 27: Austrittsöffnung
- 28: Austrittselement
- 29: Mischbehälter
- 30: Auflagefläche
- 31: Gehäuse
- 32: Steuereinheit
- 33: Touchscreen
- 34: Magnetventile
- 35: mechanische Mischeinheit
- α: Winkel der Austrittsöffnung zur Hauptebene
- D1: Durchmesser der Dampfleitung
- D2: Durchmesser der Windungen
- H: Hauptachse der Austrittseinheit
- HE: Hauptebene
- LA: Längsachse des Austrittselements
- L: Länge der Heizeinrichtung

## Patentansprüche

1. Verfahren zur Herstellung einer fluiden Komponente einer Lebensmittelgrundmasse, insbesondere Speiseeisgrundmasse, in einer Zubereitungsvorrichtung mit
- einer Dampferzeugungseinheit (2) zur Bereitstellung von Dampf,
- einer Austrittseinheit (3) zur Abgabe des Dampfes und
- einer in Strömungsrichtung des Dampfes zwischen einem Auslass (6) der Dampferzeugungseinheit (2) und einem Einlass (7) der Austrittseinheit (3) angeordneten Dampfbehandlungseinheit (4) mit einer Heizeinrichtung (5) zur Erhitzung des Dampfes,
mit den Schritten
- Zusammenführen von mindestens zwei Bestandteilen der fluiden Komponente in einem Mischbehälter (29),
- Überwachen der Temperatur der fluiden Komponente,
- Erwärmen des mittels der Dampferzeugungseinheit (2) bereitgestellten Dampfs in der Dampfbehandlungseinheit (4),
- Einbringen des erhitzten Dampfes über die Austrittseinheit (3) in die fluide Komponente,
- Regeln der Einbringung des Dampfes in Abhängigkeit von der Temperatur der fluiden Komponente.

2. Verfahren nach Anspruch 1, **dadurch gekennzeichnet, dass** der Dampf durch eine an der Austrittseinheit (3) angeordnete Austrittsöffnung (27) derart in Umfangsrichtung zu einer Hauptachse (H) der Austrittseinheit (3) in die fluide Komponente eingebracht wird, dass die fluide Komponente in dem Mischbehälter (29) in Rotation versetzt wird.

3. Verfahren nach Anspruch 1 oder 2, **dadurch gekennzeichnet, dass** der Dampf in einem Winkel α von bis zu 90 °, bevorzugt bis zu 45 °, besonders bevorzugt bis zu 25° zu einer durch die Oberfläche der fluiden Komponente gebildeten, bevorzugt senkrecht zur Hauptachse (H) der Austrittseinheit (3) angeordneten Hauptebene (HE) in die fluide Komponente eingebracht wird.

4. Verfahren nach einem oder mehrerer der vorangehenden Ansprüche, **dadurch gekennzeichnet, dass** die Einbringung des Dampfes gestoppt wird, sobald die Temperatur der fluiden Komponente einen einstellbaren Wert erreicht.

5. Verfahren nach einem oder mehrerer der vorangehenden Ansprüche, **dadurch gekennzeichnet, dass** die Einbringung des Dampfes nach einer einstellbaren Erwärmzeit gestoppt wird.

6. Verfahren nach einem oder mehrerer der vorangehenden Ansprüche, **dadurch gekennzeichnet, dass** der Dampf mit Erreichen des einstellbaren Werts der Temperatur der fluiden Komponente kontinuierlich und/oder in Zeitintervallen bis zum Ablauf einer einstellbaren Prozesszeit in die fluide Komponente eingebracht wird.

7. Verfahren nach einem oder mehrerer der vorangehenden Ansprüche, **dadurch gekennzeichnet, dass** der fluiden Komponente vor und/oder nach der Einbringung des Dampfes eine Zutat, bevorzugt eine geschmacksgebende Zutat hinzugefügt wird.

8. Verfahren nach einem oder mehrerer der vorangehenden Ansprüche, **dadurch gekennzeichnet, dass** die Temperatur der fluiden Komponente in Abhängigkeit von der hinzugefügten Zutat eingestellt wird.

9. Verfahren nach einem oder mehrerer der vorangehenden Ansprüche, **dadurch gekennzeichnet, dass** die fluide Komponente bis auf eine Temperatur zwischen 30-150 °C, bevorzugt 35-125 °C, besonders bevorzugt 40-100°C erhitzt wird.

10. Verfahren nach einem oder mehrerer der vorangehenden Ansprüche, **dadurch gekennzeichnet, dass** der Dampf mit einer Dampftemperatur von bis zu 250 °C, bevorzugt bis zu 240 °C, besonders bevorzugt bis zu 230 °C durch die Austrittsöffnung (27) in die fluide Komponente eingebracht wird.

11. Verfahren nach einem oder mehrerer der vorangehenden Ansprüche, **dadurch gekennzeichnet, dass** die Austrittseinheit (3) vor dem Einbringen des Dampfes in die fluide Komponente relativ zur Hauptebene (HE) entlang der Hauptachse (H) der Austrittseinheit (3) zwischen einer Grundstellung, in der die Austrittsöffnung (27) oberhalb der Hauptebene (HE) angeordnet ist, und einer Betriebsstellung, in der die Austrittsöffnung (27) unterhalb der Hauptebene (HE) angeordnet ist, verstellt wird.

12. Verfahren nach einem oder mehrerer der vorangehenden Ansprüche, **dadurch gekennzeichnet, dass** der Dampf über mehrere jeweils an einem Austrittselement (28) der Austrittseinheit (3) angeordnete Austrittsöffnungen (27) in die fluide Komponente eingebracht wird.

13. Verfahren zur Herstellung einer Lebensmittelgrundmasse, insbesondere Speiseeisgrundmasse, in einer Mischvorrichtung mit
- einer Dampferzeugungseinheit zur Bereitstellung von Dampf,
- einer Austrittseinheit zur Abgabe des Dampfes und
- einer in Strömungsrichtung des Dampfes zwischen einem Auslass der Dampferzeugungseinheit und einem Einlass der Austrittseinheit angeordneten Dampfbehandlungseinheit mit einer Heizeinrichtung zur Erhitzung des Dampfes und
- einer mechanischen Mischeinheit,
mit den Schritten
- Herstellung einer ersten fluiden Komponente der Lebensmittelgrundmasse nach einem oder mehrerer der vorangehenden Ansprüche 1 bis 12,
- Hinzufügen mindestens einer zweiten Komponente zu der ersten fluiden Komponente der Lebensmittelgrundmasse, wobei die erste fluide Komponente eine erste hohe Temperatur und die zweite Komponente eine im Vergleich zur ersten Temperatur niedrigere zweite Temperatur aufweist, und
- Mischen der beiden Komponenten mittels der mechanischen Mischeinheit.

14. Verfahren nach Anspruch 13, **dadurch gekennzeichnet, dass** der ersten Komponente als zweite Komponente ein Fluid, bevorzugt Wasser, besonders bevorzugt Milch hinzugefügt wird.

15. Vorrichtung zur Herstellung einer fluiden Komponente einer Lebensmittelgrundmasse oder einer Lebensmittelgrundmasse, insbesondere nach einem Verfahren nach einem oder mehrerer der Ansprüche 1 bis 14, mit
- einer Dampferzeugungseinheit (2) zur Bereitstellung von Dampf,
- einer eine Austrittsöffnung (27) aufweisenden Austrittseinheit (3) zur Abgabe des Dampfes und
- einer in Strömungsrichtung des Dampfes zwischen einem Auslass (6) der Dampferzeugungseinheit (2) und einem Einlass (7) der Austrittseinheit (3) angeordneten Dampfbehandlungseinheit (4) mit einer Heizeinrichtung (5) zur Erhitzung des Dampfes,
**dadurch gekennzeichnet, dass** die Austrittsöffnung (27) derart angeordnet ist, dass der Dampf in Umfangsrichtung zu einer Hauptachse (H) der Austrittseinheit (3) austritt.

16. Vorrichtung nach Anspruch 15, **gekennzeichnet durch** eine der Austrittseinheit (3) zugeordnete mechanische Mischeinheit (35).

## Claims

1. Method for the producing a fluid component of a food base material, in particular ice cream base material, in a preparation device with
- a steam generation unit (2) for providing steam,
- a discharge unit (3) for discharging the steam and
- a steam treatment unit (4) arranged in the direction of flow of the steam between an outlet (6) of the steam generation unit (2) and an inlet (7) of the discharge unit (3), with a heating device (5) for heating the steam,
with the steps
- combining at least two components of the fluid component in a mixing vessel (29),
- monitoring the temperature of the fluid component,
- warming up the steam provided by the steam generation unit (2) in the steam treatment unit (4),
- introduction of the heated steam into the fluid component via the discharge unit (3),
- controlling the introduction of steam depending on the temperature of the fluid component.

2. Method according to claim 1, **characterized in that** the steam is introduced into the fluid component in the circumferential direction with respect to a main axis (H) of the discharge unit (3) through a discharge opening (27) arranged on the discharge unit (3) in such a way that the fluid component in the mixing vessel (29) is set into rotation.

3. Method according to claim 1 or 2, **characterized in that** the steam is introduced into the fluid component at an angle α of up to 90 °, preferably up to 45 °, particularly preferably up to 25 ° to a main plane (HE) formed by the surface of the fluid component and preferably arranged perpendicular to the main axis (H) of the discharge unit (3).

4. Method according to one or more of the preceding claims, **characterized in that** the introduction of the steam is stopped as soon as the temperature of the fluid component reaches an adjustable value.

5. Method according to one or more of the preceding claims, **characterized in that** the introduction of the steam is stopped after an adjustable heating time.

6. Method according to one or more of the preceding claims, **characterized in that** when the temperature of the fluid component reaches the adjustable value the steam is introduced into the fluid component continuously and/or at time intervals until an adjustable process time has elapsed.

7. Method according to one or more of the preceding claims, **characterized in that** an ingredient, preferably a flavouring ingredient, is added to the fluid component before and/or after the introduction of the steam.

8. Method according to one or more of the preceding claims, **characterized in that** the temperature of the fluid component is adjusted depending on the added ingredient.

9. Process according to one or more of the preceding claims, **characterized in that** the fluid component is heated to a temperature of between 30-150°C, preferably 35-125°C, particularly preferably 40-100°C.

10. Method according to one or more of the preceding claims, **characterized in that** the steam is introduced into the fluid component through the discharge opening (27) at a steam temperature of up to 250 °C, preferably up to 240 °C, particularly preferably up to 230 °C.

11. Method according to one or more of the preceding claims, **characterized in that** the discharge unit (3) is displaced relative to the main plane (HE) along the main axis (H) of the discharge unit (3) between an initial position, in which the discharge opening (27) is arranged above the main plane (HE), and an operational position, in which the discharge opening (27) is arranged below the main plane (HE), before the steam is introduced into the fluid component.

12. Method according to one or more of the preceding claims, **characterized in that** the steam is introduced into the fluid component via a plurality of discharge openings (27) each arranged on a discharge element (28) of the discharge unit (3).

13. Method for the production of a food base material, in particular an ice cream base material, in a mixing device with
- a steam generation unit for the provision of steam,
- a discharge unit for discharging the steam and
- a steam treatment unit arranged in the direction of flow of the steam between an outlet of the steam generation unit and an inlet of the discharge unit with a heating device for heating the steam and
- a mechanical mixing unit,
with the steps
- preparation of a first fluid component of the food base material according to one or more of the preceding claims 1 to 12,
- adding at least a second component to the first fluid component of the food base material, wherein the first fluid component has a first high temperature and the second component has a second temperature lower than the first temperature, and
- Mixing of the two components using the mechanical mixing unit.

14. Method according to claim 13, **characterized in that** a fluid, preferably water, particularly preferably milk, is added to the first component as the second component.

15. Device for producing a fluid component of a food base material or a food base material, in particular according to a method according to one or more of claims 1 to 14, comprising
- a steam generation unit (2) for providing steam,
- a discharge unit (3) having a discharge opening (27) for discharging the steam, and
- a steam treatment unit (4) arranged in the direction of flow of the steam between an outlet (6) of the steam generation unit (2) and an inlet (7) of the discharge unit (3), with a heating device (5) for heating the steam,

16. Device according to claim 15, **characterized by** a mechanical mixing unit (35) associated with the discharge unit (3).

## Revendications

1. Procédé de fabrication d'un composant fluide d'une masse de base alimentaire, en particulier d'une masse de base de glace alimentaire, dans un dispositif de préparation comprenant
- une unité de production de vapeur (2) pour fournir de la vapeur,
- une unité de sortie (3) pour la délivrance de la vapeur et
- une unité de traitement de vapeur (4) disposée dans le sens d'écoulement de la vapeur entre une sortie (6) de l'unité de production de vapeur (2) et une entrée (7) de l'unité de sortie (3) et comprenant un dispositif de chauffage (5) pour chauffer la vapeur,
avec les étapes
- la réunion d'au moins deux constituants du composant fluide dans un réservoir de mélange (29),
- surveiller la température du composant fluide,
- réchauffer la vapeur fournie au moyen de l'unité de production de vapeur (2) dans l'unité de traitement de vapeur (4),
- introduction de la vapeur chauffée dans le composant fluide via l'unité de sortie (3),
- régulation de l'introduction de la vapeur en fonction de la température du composant fluide.

2. Procédé selon la revendication 1, **caractérisé en ce que** la vapeur est introduite dans le composant fluide de manière circonférentielle par rapport à un axe principal (H) de l'unité de sortie (3) par une ouverture de sortie (27) disposée sur l'unité de sortie (3), de telle sorte que le composant fluide est mis en rotation dans le réservoir de mélange (29).

3. Procédé selon la revendication 1 ou 2, **caractérisé en ce que** la vapeur est introduite dans le composant fluide selon un angle α allant jusqu'à 90 °, de préférence jusqu'à 45 °, de manière particulièrement préférée jusqu'à 25° par rapport à un plan principal (HE) formé par la surface du composant fluide et disposé de préférence perpendiculairement à l'axe principal (H) de l'unité de sortie (3).

4. Procédé selon l'une ou plusieurs des revendications précédentes, **caractérisé en ce que** l'introduction de la vapeur est arrêtée dès que la température du composant fluide atteint une valeur ajustable.

5. Procédé selon l'une ou plusieurs des revendications précédentes, **caractérisé en ce que** l'introduction de la vapeur est arrêtée après un temps de chauffage réglable.

6. Procédé selon l'une ou plusieurs des revendications précédentes, **caractérisé en ce que** la vapeur est introduite dans le composant fluide lorsque la valeur réglable de la température du composant fluide est atteinte, en continu et/ou par intervalles de temps jusqu'à l'expiration d'une durée de processus réglable .

7. Procédé selon l'une ou plusieurs des revendications précédentes, **caractérisé en ce qu'**un ingrédient, de préférence un ingrédient donnant du goût, est ajouté au composant fluide avant et/ou après l'introduction de la vapeur.

8. Procédé selon l'une ou plusieurs des revendications précédentes, **caractérisé en ce que** la température du composant fluide est ajustée en fonction de l'Ingrédient ajouté.

9. Procédé selon l'une ou plusieurs des revendications précédentes, **caractérisé en ce que** le composant fluide est chauffé jusqu'à une température comprise entre 30-150°C, de préférence 35-125°C, plus préférentiellement 40-100°C.

10. Procédé selon l'une ou plusieurs des revendications précédentes, **caractérisé en ce que** la vapeur est introduite dans le composant fluide par l'ouverture de sortie (27) avec une température de vapeur allant jusqu'à 250°C, de préférence jusqu'à 240°C, de manière particulièrement préférée jusqu'à 230°C.

11. Procédé selon l'une ou plusieurs des revendications précédentes, **caractérisé en ce que**, avant l'introduction de la vapeur dans le composant fluide, l'unité de sortie (3) est déplacée par rapport au plan principal (HE), le long de l'axe principal (H) de l'unité de sortie (3), entre une position de base, dans laquelle l'ouverture de sortie (27) est située au-dessus du plan principal (HE), et une position de fonctionnement, dans laquelle l'ouverture de sortie (27) est située en dessous du plan principal (HE).

12. Procédé selon l'une ou plusieurs des revendications précédentes, **caractérisé en ce que** la vapeur est introduite dans le composant fluide par plusieurs ouvertures de sortie (27) disposées chacune sur un élément de sortie (28) de l'unité de sortie (3).

13. Procédé de fabrication d'une masse de base alimentaire, en particulier d'une masse de base de glace alimentaire, dans un dispositif de mélange comprenant
- une unité de production de vapeur pour fournir de la vapeur,
- une unité de sortie pour la délivrance de la vapeur, et
- une unité de traitement de la vapeur disposée dans le sens de l'écoulement de la vapeur entre une sortie de l'unité de production de vapeur et une entrée de l'unité de sortie, comprenant un dispositif de chauffage pour chauffer la vapeur et
- d'une unité de mélange mécanique,
avec les étapes
- préparation d'un premier composant fluide de la masse de base alimentaire selon une ou plusieurs des revendications précédentes 1 à 12,
- l'ajout d'au moins un second composant au premier composant fluide de la masse de base alimentaire, le premier composant fluide ayant une première température élevée et le second composant ayant une seconde température inférieure à la première température, et
- mélange des deux composants au moyen de l'unité de mélange mécanique.

14. Procédé selon la revendication 13, **caractérisé en ce qu'**un fluide, de préférence de l'eau, de manière particulièrement préférée du lait, est ajouté au premier composant en tant que second composant.

15. Dispositif pour la préparation d'un composant fluide d'une masse de base alimentaire ou d'une masse de base alimentaire, en particulier selon un procédé selon une ou plusieurs des revendications 1 à 14, comprenant
- une unité de production de vapeur (2) pour fournir de la vapeur,
- une unité de sortie (3) présentant une ouverture de sortie (27) pour la délivrance de la vapeur et
- une unité de traitement de vapeur (4) disposée dans le sens d'écoulement de la vapeur entre une sortie (6) de l'unité de production de vapeur (2) et une entrée (7) de l'unité de sortie (3) et comprenant un dispositif de chauffage (5) pour chauffer la vapeur,
**caractérisé en ce que** l'ouverture de sortie (27) est disposée de telle sorte que la vapeur sort dans une direction circonférentielle vers un axe principal (H) de l'unité de sortie (3).

16. Dispositif selon la revendication 15, **caractérisé par** une unité de mélange mécanique (35) associée à l'unité de sortie (3).
